# EUROPEAN PATENT APPLICATION

(11) **EP 4 583 260 A1**
(43) Date of publication of application: **09.07.2025**
(21) Application number: 23859169.7
(22) Date of filing: 17.08.2023
(51) Int. Cl.: H01M 50/103, H01M 50/512, H01M 50/682, H01M 50/358, H01M 50/503, H01M 50/609, H01M 50/627

(54) **BATTERY SHELL, BATTERY CELL AND LARGE-CAPACITY BATTERY**

(30) Priority: 29.08.2022 CN 202211041714; 29.08.2022 CN 202222273269 U; 15.11.2022 CN 202211422703; 11.02.2023 CN 202310099665
(71) Applicant: D-Aus Energy Storage Technology (Xi'an) Co., Ltd, Xi' An, Shaanxi 710075 (CN)
(72) Inventor: CHEN, Mengqi, Xi'an, Shaanxi 710075 (CN); LEI, Zhengjun, Xi'an, Shaanxi 710075 (CN)
(74) Representative: Berggren Oy
(86) International application number: PCT/CN2023/113485
(87) International publication number: WO 2024/046135

(57) **Abstract**

A battery shell, a battery cell and a large-capacity battery, which mainly solve the problem of poor performance of existing large-capacity batteries. The battery shell is provided with a first through hole and is also provided with a pipeline covering the first through hole and extending along a thickness direction of the battery shell, the pipeline is provided with a second through hole on a pipe body, and the first through hole communicates with the second through hole. An electrolyte sharing channel of a large-capacity battery is formed through the pipeline, and battery cells in the large-capacity battery may be in a unified electrolyte environment, thereby improving the performance of the large-capacity battery.

## Description

### Technical Field

This present invention relates to the technical field of batteries, and specifically relates to a battery shell, a battery cell and a large-capacity battery.

### Background

At present, battery cells, such as cylindrical batteries, square batteries and pouch batteries, are mostly connected in parallel or connected in series on the market to meet use scenarios of larger capacities of batteries.

Chinese patent CN101286577A discloses a high-power lithium ion battery. The high-power lithium ion power battery includes a plurality of battery cell cores connected in parallel. Each battery cell core includes a positive sheet, a negative sheet, a separator and 2 to 8 positive tabs and negative tabs. The positive tab and the positive sheet are integrated and are punched out from the current collector aluminum foil of the positive sheet. The negative tab and the negative sheet are integrated and are punched out from the current collector copper foil of the negative sheet. The positive tabs of all battery cell cores are welded on positive poles, and all negative tabs are welded on negative poles to form a large-capacity battery.

The capacity of the above large-capacity battery is increased by connecting a plurality of battery cell cores in parallel, but the large-capacity battery has the following defects: The quality of each battery cell core cannot be effectively controlled before the large-capacity battery is formed. Furthermore, electrolytes of the battery cell cores in the large-capacity battery are independent of each other. After a period of use, the electrolyte in each battery cell core has different loss situations, so that the stability and consistency of the large-capacity battery composed of a plurality of battery cell cores are poor, the performance of the large-capacity battery is poor, and the yield is lower. Therefore, how to assemble a plurality of battery cores into a large-capacity battery with stable performance and higher yield is an urgent problem to be solved.

### Summary

Some embodiments of the present invention provide a battery shell, a battery cell and a large-capacity battery to mainly solve the problem of poor performance of existing large-capacity batteries. In order to solve the above problem, this present invention provides the following technical solutions:
This present invention provides a battery shell, the battery shell is provided with a first through hole and is also provided with a pipeline covering the first through hole and extending along a thickness direction of the battery shell, the pipeline is provided with a second through hole on a pipe body, and the first through hole communicates with the second through hole.

In an embodiment, the first through hole or the second through hole is provided with a sealing film, and the sealing film is dissolved when encountering an electrolyte or is opened under the action of an external force.

In an embodiment, the sealing film is provided with a traction ring, and the traction ring is pulled apart under the traction of an external force to form an opening for injecting an electrolyte. In an embodiment, the sealing film is provided with a weak part.

In an embodiment, when the sealing film is soluble in an electrolyte, a protective film which is insoluble in the electrolyte is also arranged on a side of the sealing film facing the inside of the battery shell, and after the sealing film is dissolved in the electrolyte, the protective film subsequently falls off.

In an embodiment, the battery shell includes an upper cover plate, a lower cover plate and a barrel, the upper cover plate is provided with a positive pole and a negative pole, and the first through hole is arranged on the lower cover plate; the lower cover plate is also provided with a first mounting seat along a thickness direction of the battery shell; and a side wall of the barrel is also provided with a second mounting seat along a height direction of the battery shell.

In an embodiment, the lower cover plate and the pipeline are integrally formed aluminum extrusion components; the barrel is an aluminum extrusion component; and the lower cover plate and the barrel are fixed by laser welding. Further, a surface of the barrel is provided with a plurality of heat dissipation grooves.

This present invention provides another battery shell, a pouch battery core is placed in the battery shell, the battery shell is enclosed by an upper cover plate, a lower cover plate and a barrel, the battery shell also includes an electrolyte sharing unit arranged on the lower cover plate or the barrel, the electrolyte sharing unit includes a pipeline and a first through hole, the lower cover plate or the barrel is provided with a second through hole, and the first through hole communicates with the second through hole.

In an embodiment, the lower cover plate or the barrel is provided with a fixed base, and the pipeline is laid on the fixed base along a thickness direction of the battery shell. Further, the fixed base is provided with a fourth through hole, so that the first through hole communicates with the second through hole through the fourth through hole.

In an embodiment, two ends of the pipeline are respectively provided with connectors to fixedly connect a plurality of electrolyte sharing units.

In an embodiment, one end of the pipeline is provided with a connecting nozzle, the other end of the pipeline is provided with a connecting port, and the connecting nozzles of two adjacent electrolyte sharing units are fixedly connected with the connecting ports.

In an embodiment, an outer circumference of the connecting nozzle and/or an inner circumference of the connecting port is provided with a sealing ring.

In an embodiment, the pipeline is also provided with a blocking component.

In an embodiment, the second through hole is provided with a sealing film to seal the second through hole; or the first through hole is provided with a sealing film to seal the first through hole. In an embodiment, the sealing film is dissolved when encountering an electrolyte.

In an embodiment, the sealing film is also provided with a protective film which is insoluble in the electrolyte, the protective film is attached to a side of the sealing film facing the inside of the battery shell, and when the sealing film is dissolved in the electrolyte, the protective film subsequently falls off.

This present invention provides a battery shell, the battery shell is enclosed by a barrel, an upper cover plate and a lower cover plate, the upper cover plate is provided with a pair of poles in an insulated manner, the pole is a cylinder, the cylinder includes a side wall, a first end surface and a second end surface, the side wall and/or the first end surface is at least provided with one through groove to mount a heat transfer pipe, and the first end surface is also provided with an electrical connection region; and the lower cover plate is provided with a first through hole and is also provided with a pipeline covering the first through hole and extending along a width or length direction of the lower cover plate, the pipeline is provided with a second through hole, and the first through hole communicates with the second through hole.

In an embodiment, the second end surface is provided with a conductive connection seat for electrical connection with the electrode assembly in the battery shell.

In an embodiment, the height of the pole is 20-25 mm, the cross section of the through groove is C-shaped or U-shaped, and the distance between the lowest point of the through groove and the second end surface is 7-12 mm.

In an embodiment, the ratio of the diameter of the heat transfer pipe to the widest point of the through groove is (1:1.05)-(1:1.1); and the ratio of the length of the through groove to the width of the cover plate is (0.7:1)-(0.9:1).

In an embodiment, the through groove is arranged on the first end surface, the through groove divides the first end surface into a first region and a second region, the first region is the electrical connection region, and the ratio of the area of the first region to the area of the first end surface is not lower than 50%. Further, a surface of the through groove is provided with an insulating layer.

In an embodiment, the first through hole or the second through hole is provided with a sealing sheet; the sealing sheet is provided with a traction ring, and the traction ring enables the sealing sheet to be pulled apart under the traction of an external force to form an opening; or the first through hole or the second through hole is provided with a sealing film, the sealing film is soluble in an electrolyte, and a protective film which is insoluble in the electrolyte is also arranged on a side of the sealing film facing the inside of the battery shell; and after the sealing film is dissolved in the electrolyte, the protective film subsequently falls off.

In an embodiment, the lower cover plate is also provided with a first mounting seat along a width direction thereof; a side wall of the barrel is also provided with a second mounting seat along a height direction thereof; and the barrel is provided with a plurality of reinforcing ribs along a height direction thereof.

In an embodiment, the lower cover plate and the pipeline are integrally formed aluminum extrusion components; the barrel is an aluminum extrusion component; and the lower cover plate and the barrel are fixed by laser welding.

This present invention further provides a battery cell, and the battery cell includes any of the above battery shells.

This present invention further provides a battery cell, the battery cell includes a battery shell, a sealing assembly and a finished battery core, the finished battery core is mounted in the battery shell, and a finished battery core shell is provided with an opening; the battery shell is provided with a first through hole communicating with the opening and a pipeline extending along a width or length direction of the battery shell, and a side wall of the pipeline is provided with a second through hole communicating with the first through hole; and the sealing assembly is arranged on the opening or the first through hole or the second through hole.

In an embodiment, the battery shell includes a barrel and a lower cover plate; and two ends of the barrel are open ends, the lower cover plate is sealed and fixed at one end of the barrel, and the first through hole and the pipeline are both arranged on the lower cover plate.

In an embodiment, the battery shell also includes an upper cover plate, and a positive pole and a negative pole of the finished battery core both extend out of the upper cover plate.

In an embodiment, the positive pole and the negative pole of the finished battery core are both provided with through grooves for mounting heat transfer pipes.

In an embodiment, the battery shell also includes an upper cover plate, the upper cover plate is provided with a positive terminal and a negative terminal, the positive terminal is connected to the positive pole of the finished battery core, and the negative terminal is connected to the negative pole of the finished battery core.

In an embodiment, the positive terminal and the negative terminal are both provided with through grooves for mounting heat transfer pipes.

In an embodiment, the sealing assembly includes a fixed part and an electrolyte injection part, and the fixed part is a sheet structure provided with a third through hole to fix the fixed part on the opening or the first through hole or the second through hole; and the electrolyte injection part is a hollow tubular structure provided with an open end and a closed end, the open end is fixed on the third through hole to enable the electrolyte injection part to communicate with an inner cavity of the battery shell, and the closed end is configured to inject an electrolyte into the inner cavity of the battery shell after being opened under the action of an external force.

In an embodiment, the sealing assembly is a sealing sheet fixed on the opening or the first through hole or the second through hole, the sealing sheet is provided with a traction ring, and the traction ring enables the sealing sheet to be pulled apart under the traction of an external force to form an opening; or the sealing assembly is a sealing film fixed on the opening or the first through hole or the second through hole, the sealing film is soluble in an electrolyte, and a protective film which is insoluble in the electrolyte is also arranged on a side of the sealing film facing the inside of the battery shell; and after the sealing film is dissolved in the electrolyte, the protective film subsequently falls off.

In an embodiment, the lower cover plate is also provided with a first mounting seat along a width direction thereof; and a side wall of the barrel is also provided with a second mounting seat and a plurality of reinforcing ribs along a height direction thereof.

In an embodiment, the lower cover plate and the pipeline are integrally formed aluminum extrusion components; the barrel is an aluminum extrusion component; and the lower cover plate and the barrel are fixed by laser welding.

In an embodiment, the finished battery core is a commercially available square battery core or the finished battery cores are a plurality of commercially available pouch battery cores connected in parallel.

This present invention further provides a battery pack, including a plurality of any of the above battery cells connected in parallel.

This present invention further provides a large-capacity battery, including a plurality of battery packs composed of any of the above battery cells connected in parallel.

In an embodiment, the battery cells are connected by a connector, the pipelines of two adjacent battery cells are connected by the connector, and the inside of the connector is hollow and communicated.

In an embodiment, two ends of the connector include connecting nozzles, two ends of the pipeline are provided with connecting ports, and the connecting nozzle is embedded in the connecting port for sealed connection; or two ends of the connector include connecting ports, two ends of the pipeline are provided with connecting nozzles, and the connecting nozzle is embedded in the connecting port for sealed connection. Further, the connecting nozzle is a conical nozzle, and the connecting nozzle is in interference fit with the connecting port.

In an embodiment, the connecting nozzle is in threaded connection with the connecting port.

In an embodiment, a pouch battery core is built in the battery shell, the pipelines are spliced to form an explosion venting channel of the battery pack, and at least one end of the explosion venting channel is provided with a fume outlet.

In an embodiment, an electrode assembly or a pouch battery core provided with an opening is built in the battery shell; when the pipelines are spliced to form an electrolyte sharing channel of the battery pack, the first through hole or the second through hole is provided with a sealing film, and the sealing film is dissolved when encountering an electrolyte or is opened under the action of an external force; and one end of the electrolyte sharing channel is provided with an explosion venting assembly, and the other end of the electrolyte sharing channel is provided with a blocking component.

In an embodiment, the explosion venting assembly is provided with a detachable port, and the port is configured to inject an electrolyte into the electrolyte sharing channel.

The technical solutions of this present invention have the following beneficial effects:
1. In this present invention, a plurality of battery cells are connected in parallel to form a large-capacity battery, and the electrolytes of all battery cells are communicated through the electrolyte sharing channel spliced by pipelines. Before assembly, the capacity division may be performed for each battery cell, thereby effectively improving the yield and safety of large-capacity battery production. Due to the integrated design of the pipeline and the battery shell, the integration level of the battery shell is higher, the assembly process is simplified, the structure is simple, and the using effect is good.
2. In this present invention, the electrolyte sharing channel of the large-capacity battery is formed by splicing pipelines, and the battery cells in the large-capacity battery may be in a unified electrolyte environment, thereby improving the performance of the large-capacity battery. In the later stage, the electrolyte may also be replenished and replaced. Furthermore, the explosion venting channel of the large-capacity battery is formed by splicing pipelines to guide the thermal runaway fumes out, thereby improving the explosion venting safety.
3. In this present invention, by splicing electrolyte unit sharing pipelines, the pipeline assembly may be efficiently and conveniently completed, the battery cells in the large-capacity battery may be in a unified electrolyte injection environment, the uniformity and yield of the battery cell are significantly improved, and the convenience may be provided for replenishing and replacing the electrolyte in the later stage. In an embodiment, the electrolyte sharing pipeline is integrated on the battery cell, so that the integration level of the battery shell is higher, the assembly process is simplified, the structure is simple, and the using effect is good.
4. In the battery shell of this present invention, by providing the through groove on the pole and then placing the heat transfer pipe in the through groove, the higher heat concentrated on the pole may be conducted to the outside through the heat transfer pipe, so that the temperature of the battery may be effectively controlled, and the safety performance of the battery may be improved. By providing the through hole and the pipeline with the through hole on the battery shell, when the batteries are assembled into a battery pack, a channel is formed through the pipeline to achieve directional discharge of the thermal runaway fumes of the battery. Furthermore, an electrolyte may be uniformly injected into the battery pack to enable each battery in the battery pack to be located in an electrolyte sharing system, or an electrolyte is replenished for the battery pack. The design of the pipeline structure greatly reduces the risk of explosion during thermal runaway of the battery to improve the safety performance of the battery or the battery pack, can also improve the problem of inconsistency of the electrolyte of each battery in the battery pack, and can also replenish an electrolyte for the battery pack after a certain period of use to improve the performance of the battery or the battery pack and prolong the service life of the battery or the battery pack.
5. In the battery shell of this present invention, due to the arrangement of the conductive connection seat, when the pole is assembled in the battery shell, the connection is tighter and more stable, and the mounting of the electrode assembly can also be facilitated. Due to the arrangement of the mounting seat, when the batteries are assembled into a battery pack, the batteries may be assembled and fixed by additionally providing mounting components. The barrel is provided with a plurality of reinforcing ribs, thereby improving the pressure bearing capacity of the barrel.
6. In the battery shell of this present invention, the radians formed at two ends of the C-shaped through groove have natural tension, which is favorable for tightly clamping the heat transfer pipe in the through groove. The opening width of the U-shaped through groove is relatively close to the widest point of the through groove, which is convenient for placing the heat transfer pipe, and can provide a sufficient operating space for special tools to flatten the heat transfer pipe or more tightly attach the heat transfer pipe to the through groove. Furthermore, the first end surface of the pole is provided with an electrical connection region, so that an electrode plate may be mounted on the electrical connection region to achieve parallel connection of a plurality of battery cells. In addition, the arrangement of the insulating layer can eliminate the limitation of parallel connection when a metal heat transfer pipe is mounted in the battery pack, thereby improving the practicability of the battery.
7. In the battery shell of this present invention, due to the arrangement of the sealing sheet or the sealing film, when the batteries are assembled into a battery pack, by dissolving the sealing film or forming an opening in the sealing sheet, an opening of an electrolyte injection channel is formed to inject an electrolyte, so as to enable each battery in the battery pack to be located in an electrolyte sharing system to ensure the performance of the battery pack.
8. In the battery cell of this present invention, by providing the first through hole and the pipeline with the second through hole on the battery shell of the battery cell, when the battery cells are assembled into a battery pack, a channel is formed through the pipeline to achieve directional discharge of the thermal runaway fumes of the battery. Furthermore, an electrolyte may be uniformly injected into the battery pack to enable each battery in the battery pack to be located in the same electrolyte system, or an electrolyte is replenished for the battery pack. The design of the pipeline structure greatly reduces the risk of explosion during thermal runaway of the battery to improve the safety performance of the battery or the battery pack, also overcomes the problem of inconsistency of the electrolyte of each battery cell in the battery pack, and may also replenish an electrolyte for each battery cell in the battery pack after a certain period of use to improve the performance of the battery or the battery pack and prolong the service life of the battery or the battery pack. The battery shell is sleeved outside the finished battery core, an existing finished battery core production line may be used to simply improve the finished battery core, and then, the finished battery core may be put into production, thereby saving the resources and saving the production cost.
9. In the battery cell of this present invention, arranging the pipeline on the lower cover plate is favorable for making the left and right ends of the battery pack compact and saving the assembly space when large-capacity batteries are assembled into a battery pack.
10. In the battery cell of this present invention, due to the arrangement of the sealing sheet or the sealing film, when the batteries are assembled into a battery pack, by dissolving the sealing film or forming an opening in the sealing sheet, an opening of an electrolyte injection channel is formed to inject an electrolyte, so as to enable each battery in the battery pack to be located in an electrolyte sharing system to ensure the performance of the battery pack.
11. In the battery cell of this present invention, in order to reduce the process cost, the lower cover plate and the pipeline are integrally formed aluminum extrusion components; the barrel is an aluminum extrusion component; and the lower cover plate and the barrel are fixed by laser welding to ensure better sealing performance between the lower cover plate and the barrel.

### Brief Description of the Drawings

Fig. 1 is a first schematic structural diagram of a battery shell in Embodiment 1;
Fig. 2 is a second schematic structural diagram of the battery shell in Embodiment 1;
Fig. 3a is a schematic cross-sectional structural diagram of the battery shell in Embodiment 1;
Fig. 3b is a first schematic cross-sectional structural diagram of a lower cover plate of the battery shell in Embodiment 1;
Fig. 3c is a second schematic cross-sectional structural diagram of the lower cover plate of the battery shell in Embodiment 1;
Fig. 4 is a schematic structural diagram of a connector of the battery shell in Embodiment 1;
Fig. 5 is a third schematic structural diagram of the battery shell in Embodiment 1;
Fig. 6 is a fourth schematic structural diagram of the battery shell in Embodiment 1;
Fig. 7a is a schematic cross-sectional structural diagram of a battery shell in Embodiment 2;
Fig. 7b is a first schematic cross-sectional structural diagram of a lower cover plate of the battery shell in Embodiment 2;
Fig. 7c is a second schematic cross-sectional structural diagram of the lower cover plate of the battery shell in Embodiment 2;
Fig. 8 is a schematic structural diagram of the battery shell in Embodiment 2;
Fig. 9 is a schematic cross-sectional structural diagram of the battery shell in Embodiment 2;
Fig. 10 is a schematic structural diagram of battery packs in Embodiment 5;
Fig. 11 is a schematic structural diagram of a large-capacity battery in Embodiment 5;
Fig. 12 is a schematic structural diagram of a battery shell in Embodiment 6;
Fig. 13 is a schematic cross-sectional structural diagram of a sharing pipeline in Embodiment 6;
Fig. 14 is a schematic structural diagram of a lower cover plate in Embodiment 6;
Fig. 15 is a schematic structural diagram of the sharing pipeline in Embodiment 6;
Fig. 16 is a schematic structural diagram of a large-capacity battery in Embodiment 7;
Fig. 17 is a first schematic structural diagram of a battery shell in Embodiment 8;
Fig. 18 is a second schematic structural diagram of the battery shell in Embodiment 8;
Fig. 19a is a first schematic cross-sectional structural diagram of a lower cover plate of the battery shell in Embodiment 8;
Fig. 19b is a second schematic cross-sectional structural diagram of the lower cover plate of the battery shell in Embodiment 8;
Fig. 20 is a schematic structural diagram of the battery shell and a connector in Embodiment 8;
Fig. 21a is a schematic structural diagram of the battery shell and a sealing film in Embodiment 8;
Fig. 21b is a schematic cross-sectional structural diagram of the battery shell and the sealing film in Embodiment 8;
Fig. 21c is a first schematic cross-sectional structural diagram of the lower cover plate and the sealing film in Embodiment 8;
Fig. 21d is a second schematic cross-sectional structural diagram of the lower cover plate and the sealing film in Embodiment 8;
Fig. 22a is a schematic structural diagram of the battery shell and a sealing sheet in Embodiment 8;
Fig. 22b is a schematic cross-sectional structural diagram of the battery shell and the sealing sheet in Embodiment 8;
Fig. 23 is a schematic structural diagram of a pole in Embodiment 8;
Fig. 24 is a schematic structural diagram after an upper cover plate and the pole are mounted in Embodiment 8;
Fig. 25 shows schematic structural diagrams after multiple poles and conductive connection seats are fixed in Embodiment 8;
Fig. 26 shows schematic diagrams of size definition of the poles in Embodiment 8;
Fig. 27 is a schematic diagram of size definition of the upper cover plate and the pole in Embodiment 8;
Fig. 28 is a first schematic structural diagram of battery packs in Embodiment 9;
Fig. 29 is a second schematic structural diagram of the battery packs in Embodiment 9;
Fig. 30 is a schematic structural diagram of a first perspective of a battery shell of a battery cell in Embodiment 10;
Fig. 31a is a schematic structural diagram of a first perspective of a battery cell with a built-in finished square battery core in Embodiment 10;
Fig. 31b is a schematic structural diagram of a second perspective of the battery cell with the built-in finished square battery core in Embodiment 10;
Fig. 32a is a first schematic structural diagram of a sealing assembly in Embodiment 10;
Fig. 32b is a schematic structural diagram of the sealing assembly with a positioning part in Embodiment 10;
Fig. 32c is a second schematic structural diagram of the sealing assembly in Embodiment 10;
Fig. 32d is a schematic structural diagram of the sealing assembly and the battery shell of the battery cell in Embodiment 10;
Fig. 33 is a schematic structural diagram of a battery cell with a built-in finished square battery core and an upper cover plate in Embodiment 11;
Fig. 34a is a first schematic diagram of a first perspective of a battery cell with a built-in finished square battery core and terminals in Embodiment 12;
Fig. 34b is a second schematic diagram of the first perspective of the battery cell with the built-in finished square battery core and the terminals in Embodiment 12;
Fig. 34c is a schematic structural diagram of a second perspective of the battery cell with the built-in finished square battery core and the terminals in Embodiment 12;
Fig. 34d is a schematic structural diagram of a second perspective of the battery shell in Embodiment 12;
Fig. 35a is a schematic structural diagram of a first perspective of a battery cell with built-in finished pouch battery cores in Embodiment 13;
Fig. 35b is a schematic structural diagram of a second perspective of the battery cell with the built-in finished pouch battery cores in Embodiment 13;
Fig. 35c is a schematic diagram of a first perspective of a battery cell with built-in finished pouch battery cores and electrical busbars in Embodiment 14;
Fig. 35d is a schematic diagram of a second perspective of the battery cell with the built-in finished pouch battery cores and the electrical busbars in Embodiment 14; and
Fig. 35e is a schematic structural diagram of an electrical busbar in Embodiment 14.

List of Reference Numerals: 11-upper cover plate; 12-lower cover plate; 121-first through hole; 13-barrel; 14-pipeline; 141-connecting port; 142-second through hole; 143-explosion venting assembly; 17-connector; 171-connecting nozzle; 18-sealing film; 181-traction ring; 191-first mounting seat; 192-second mounting seat; 193-heat dissipation groove; 101-mounting bracket; 102-mounting component; 210-battery shell; 211-upper cover plate; 212-lower cover plate; 213-barrel; 214-second through hole; 230-electrolyte sharing unit; 231-pipeline; 231a-connecting nozzle; 231b-connecting port; 232-first through hole; 233-base; 234-sealing ring; 260-battery outer shell; 241-positive pole; 242-negative pole; 3100-battery cell; 3200-connecting assembly; 3201-assembly strip; 3202-assembly base; 3300-sharing pipeline assembly; 3400-heat transfer assembly; 31-upper cover plate; 312-first insulating component; 313-second insulating component; 32-lower cover plate; 321-first through hole; 33-barrel; 331-first battery mounting seat; 332-second battery mounting seat; 333-heat dissipation groove; 334-reinforcing rib; 34-pipeline; 341-connecting port; 342-second through hole; 343-explosion venting assembly; 35-pole; 350-through groove; 351-first end surface; 3511-first region; 3512-second region; 352-second end surface; 353-side wall; 354-conductive connection seat; 36-heat transfer pipe; 37-connector; 371-connecting nozzle; 381-sealing film; 382-sealing sheet; 3821-traction ring; 391-electrical connector; 392-battery management system; 41-upper cover plate; 42-lower cover plate; 43-barrel; 431-first mounting seat; 432-second mounting seat; 433-fixed hole; 434-reinforcing rib; 44-pipeline; 443-explosion venting assembly; 45-terminal; 45a-positive terminal; 45b-negative terminal; 450-through groove; 46-electrical busbar; 461-base; 462-clamping groove; 4500-sealing mechanism; 451-fixed part; 452-electrolyte injection part; 453-positioning part; 4540-weak groove; 4541-weak end; 4600-finished square battery core; 4601-pole; 4601a-positive pole; 4601b-negative pole; 4602-opening; 4700-finished pouch battery core; 4701a-positive tab; 4702b-negative tab; 4702-opening.

### Detailed Description of the Embodiments

In order to make the objectives, technical solutions and advantages of this present invention more clear, this present invention will be further described in detail below with reference to accompanying drawings and embodiments. It should be understood that the specific embodiments described herein are only used to explain this present invention and are not intended to limit this present invention.

### Embodiment 1

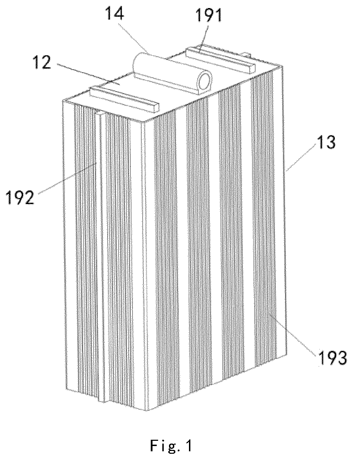

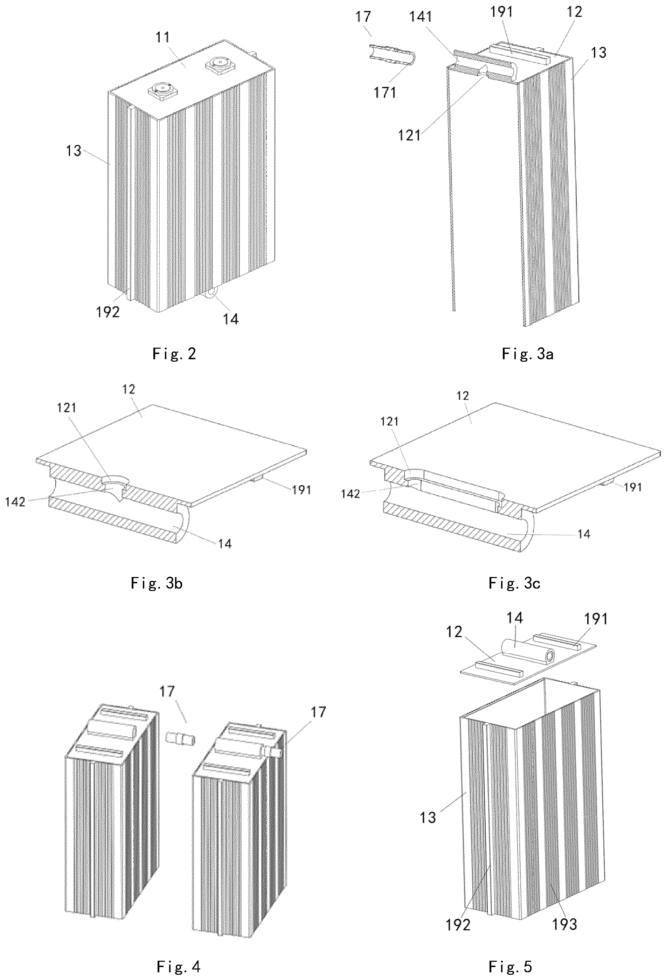

Fig. 1 and Fig. 2 are schematic structural diagrams of a battery shell in this embodiment. A plurality of pouch battery cores are placed in the battery shell, and the battery shell includes an upper cover plate 11, a lower cover plate 12, a barrel 13 and a pipeline 14. The upper cover plate 11 is provided with a positive pole and a negative pole of a battery cell. As shown in Fig. 3a, Fig. 3b and Fig. 3c, the lower cover plate 12 is provided with a first through hole 121 and is also provided with a pipeline 14 covering the first through hole 121 and extending along a thickness direction of the battery shell, the pipeline 14 is provided with a second through hole 142 on a pipe body, and the first through hole 121 communicates with the second through hole 142. The first through hole 121 and the second through hole 142 are respectively circular or strip-shaped through holes.

In this embodiment, the battery shell is used for a battery pack composed of built-in pouch battery cores, and a large-capacity battery is formed. At this time, the battery pack forms an explosion venting channel through splicing of the pipelines 14 on the battery shell, and one end of the explosion venting channel is provided with a fume outlet. After the explosion venting channel is formed through splicing of the pipelines, during thermal runaway of any battery core, thermal runaway fumes pass through the first through hole 121 and the second through hole 142 and then enter the pipeline 14, and the pipeline 14 guides the thermal runaway fumes to be discharged to a designated position. One end of the explosion venting channel is connected to a thermal runaway fume processing device so as to cool and adsorb the thermal runaway fumes or ignite the thermal runaway fumes.

As shown in Fig. 3a to Fig. 3c and Fig. 4, in some implementations, the pipelines 14 are connected to each other through a connector 17. The outline sizes of the connector 17 are equivalent to the outline sizes of the pipeline 14, thereby being favorable for improving the stability of connection between the pipelines 14.

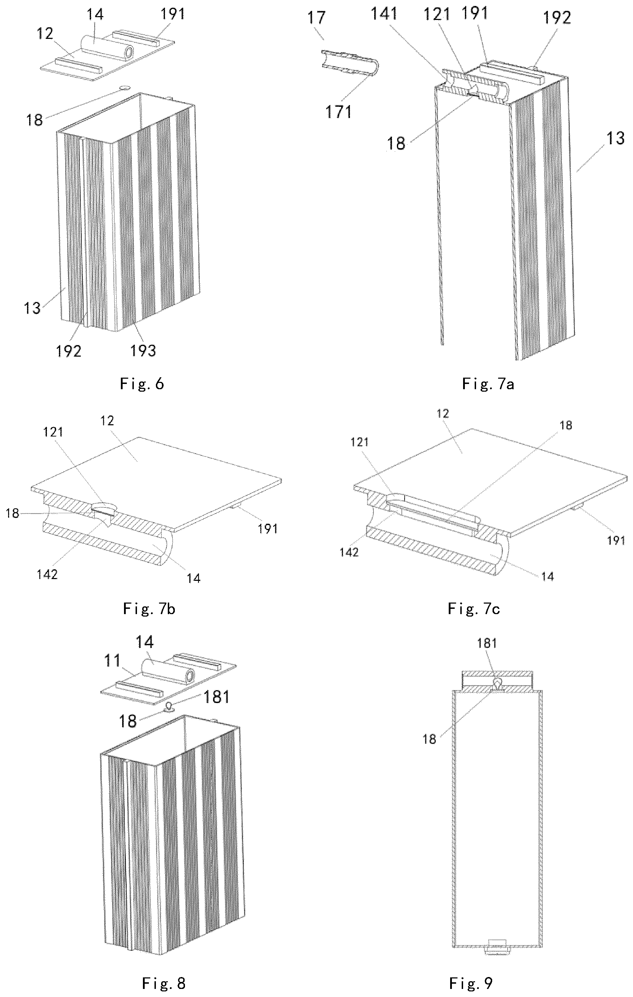

As shown in Fig. 7a, the connector 17 includes two connecting nozzles 171, two ends of the pipeline 14 are provided with connecting ports 141, and the connecting nozzle 171 is embedded in the connecting port 141 for sealed connection; or the connector includes two connecting ports, two ends of the pipeline are provided with connecting nozzles, and the connecting nozzle is embedded in the connecting port for sealed connection. The preferred shape of the connecting nozzle is a micro-conical shape, so that the connecting nozzle may be inserted into the connecting port conveniently. Moreover, the connecting nozzle is in interference fit with the connecting port, the connecting nozzle is riveted with the connecting port, or the connecting nozzle is in threaded connection with the connecting port.

As shown in Fig. 5 and Fig. 6, in some implementations, the lower cover plate 12 is also provided with a first mounting seat 191 along a thickness direction of the battery shell; and the barrel is also provided with a second mounting seat 192 along a height direction of the battery shell. The mounting seat on the battery pack is a base for fixing when the battery pack is mounted into a large-capacity battery, and the base is provided with threaded holes for fixing. A surface of the battery shell is provided with a plurality of heat dissipation grooves 193 extending along a height direction to facilitate the heat dissipation of the battery shell. The lower cover plate 12 and the pipeline 14 are integrally formed aluminum extrusion components, and the first through hole and the second through hole may be combined into one through hole. The barrel 13 is also an aluminum extrusion component, the lower cover plate 12 and the barrel 13 are fixed by laser welding, and the fixing manner is economical and convenient and has good effects.

### Embodiment 2

Fig. 1 and Fig. 2 are schematic structural diagrams of a battery shell in this embodiment. An electrode assembly or a pouch battery core provided with an opening is placed in the battery shell, that is, a pouch battery core shell is provided with an opening for injecting an electrolyte, and the battery shell is provided with an upper cover plate 11, a lower cover plate 12, a barrel 13 and a pipeline 14. The upper cover plate 11 is provided with a positive pole and a negative pole of a battery. As shown in Fig. 7a, Fig. 7b and Fig. 7c, the lower cover plate 12 is provided with a first through hole 121 and is also provided with a pipeline 14 covering the first through hole 121 and extending along a thickness direction of the battery shell, the pipeline 14 is provided with a second through hole 142 on a pipe body, and the first through hole 121 communicates with the second through hole 142. The first through hole 121 and the second through hole 142 are respectively circular or strip-shaped through holes. In some implementations, the pipeline 14 is arranged on the barrel of the battery shell and extends along a thickness direction of the battery shell. In some implementations, the pipeline 14 is arranged on the lower cover plate of the battery shell and extends along a thickness direction of the battery shell.

In this embodiment, the battery shell is used for a built-in electrode assembly or a pouch battery core provided with an opening. At this time, the pipelines 14 on the battery shell are spliced to form an electrolyte sharing channel of a battery core module, and one end of the electrolyte sharing channel is provided with an electrolyte injection mechanism. After the electrolyte sharing channel is formed through splicing of the pipelines, an electrolyte injected by the electrolyte injection mechanism sequentially passes through the second through hole 142 and the first through hole 121 and then enters the battery shell, and all battery cores in the battery core module are in a unified electrolyte environment, so that the uniformity of the battery core module may be effectively improved. The electrolyte injection mechanism may also be configured to replenish or replace an electrolyte for the battery core module. When the battery core module is used for more than a certain period of time, the electrolyte is lost; and at this time, extracting the electrolyte and replacing the electrolyte with a new electrolyte or directly replenishing a new electrolyte are favorable for prolonging the service life of a large-capacity battery. During use under conventional conditions, since one end of the electrolyte sharing channel is provided with an explosion venting assembly, during thermal runaway of any battery core in the battery core module, the thermal runaway fumes generated by the battery core sequentially pass through the first through hole 121 and the second through hole 142 and then converge in the pipeline 14, and are discharged through the explosion venting assembly to a designated place for effective processing, and the thermal runaway fumes are cooled and adsorbed or ignited and then discharged.

As shown in Fig. 4, in some implementations, the pipelines 14 are connected to each other through a connector 17. The outline sizes of the connector 17 are equivalent to the outline sizes of the pipeline 14, thereby being favorable for improving the stability of connection between the pipelines 14. The structure of the connector 17 is detailed in Embodiment 1.

As shown in Fig. 6 and Fig. 7a to Fig. 7c, in some implementations, the first through hole 121 or the second through hole 142 is provided with a sealing film 18. The sealing film 18 is configured to isolate the electrode assembly or the pouch battery core provided with an opening on the shell from air before battery formation and capacity division, or to serve as an explosion venting film. When a large-capacity battery is formed, the sealing film 18 is opened, the battery shell forms an opening, and an electrolyte may enter the battery shell, thereby achieving the effect of electrolyte communication of a plurality of battery cores.

As shown in Fig. 8 and Fig. 9, an external force for opening the sealing film 18 may be a special tool, or the sealing film 18 is provided with a traction ring 181 and a weak part. During assembly of a battery core module, traction wires are used to uniformly thread the traction rings 181. During electrolyte injection, by pulling the traction wires threading all traction rings 181, the sealing film 18 of each battery core is torn off from the weak part, and an electrolyte enters all battery cores in the battery core module. This operation should be completed in a vacuum environment to prevent the battery core module from being exposed to the air.

In some implementations, a layer of protective film is attached to the sealing film 18, and the sealing film 18 may be dissolved when encountering an electrolyte. In order to prevent the electrolyte in the battery core from dissolving the sealing film 18 in advance, a layer of protective film should be attached to the sealing film 18. When the electrolyte needs to be injected, the electrolyte enters the electrolyte sharing channel, and after the sealing film 18 is dissolved when encountering the electrolyte, the protective film attached to the sealing film 18 also subsequently falls off, so that the electrolyte may enter the battery shell. This manner avoids the use of other tools and has low requirements for the operating environment. As long as the electrolyte sharing channel is sealed in time after the electrolyte is injected, it may be ensured that the electrolyte and the electrode assembly are not exposed to the air.

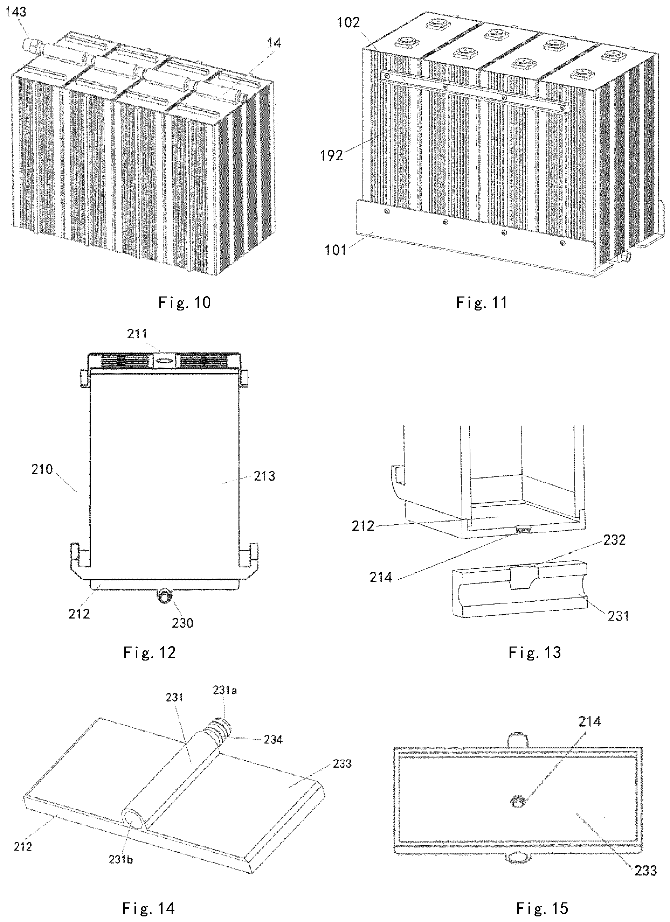

As shown in Fig. 10, during conventional use, an explosion venting assembly 143 is mounted at one end of the pipeline 14, and the other end of the pipeline 14 is blocked by a blocking component. The explosion venting assembly 143 is also provided with a detachable port, and the port is configured to inject an electrolyte into an electrolyte storage chamber. After electrolyte injection, the explosion venting assembly 143 returns to a conventional use state.

### Embodiment 3

This embodiment provides a battery cell, and a plurality of pouch battery cores are placed in a battery shell. Fig. 1 and Fig. 2 are schematic structural diagrams of a battery shell. The battery shell is provided with an upper cover plate 11, a lower cover plate 12, a barrel 13 and a pipeline 14. The upper cover plate 11 is provided with a positive pole and a negative pole of a battery. The specific structure of the battery shell is the same as that in Embodiment 1, and the specific structure is detailed in Embodiment 1.

### Embodiment 4

This embodiment provides a battery cell, and an electrode assembly or a plurality of pouch battery cores provided with openings are built in a battery shell, that is, a pouch battery shell is provided with an opening for injecting an electrolyte. Fig. 1 and Fig. 2 are schematic structural diagrams of a battery shell. The battery shell is provided with an upper cover plate 11, a lower cover plate 12, a barrel 13 and a pipeline 14. The upper cover plate 11 is provided with a positive pole and a negative pole of a battery. The specific structure of the battery shell is the same as that in Embodiment 2, and the specific structure is detailed in Embodiment 2.

### Embodiment 5

As shown in Fig. 10 and Fig. 11, this embodiment provides a large-capacity battery, including a plurality of battery packs composed of battery cores described in Embodiment 3 or Embodiment 4 connected in parallel. The battery packs are fixedly mounted on a mounting bracket 101 through a first mounting seat 191 and a second mounting seat 192 and are connected through a mounting component 102, thereby facilitating transport and fixation.

### Embodiment 6

Fig. 12 is a schematic structural diagram of a battery shell provided in this embodiment. The battery shell 210 is suitable for placing a pouch battery core. The battery shell 210 is enclosed by an upper cover plate 211, a lower cover plate 212 and a barrel 213, and the battery shell 210 also includes an electrolyte sharing unit 230 arranged on the lower cover plate 212 or the barrel 213. In this embodiment, the electrolyte sharing unit 230 is arranged on the lower cover plate of the battery shell 210. However, in some implementations, the electrolyte sharing unit 230 may also be arranged on the barrel 213 or even on the upper cover plate 211 according to specific conditions.

As shown in Fig. 13, the electrolyte sharing unit 230 includes a pipeline 231 and a first through hole 232, the lower cover plate 212 is provided with a second through hole 214, and a plurality of first through holes 232 respectively communicate with the second through hole 214. As shown in Fig. 14, in some implementations, the lower cover plate 212 or the barrel 213 is provided with a fixed base 233, the pipeline 231 is laid on the fixed base 233 along a thickness direction of the battery shell 210, an axial direction of the pipeline 231 is consistent with the thickness direction of the battery shell 210, and the fixed base 233 is provided with a fourth through hole, so that the first through hole 232 communicates with the second through hole 214 through the fourth through hole. As shown in Fig. 15, the fixed base 233 and the lower cover plate 212 are integrated, and the pipeline 231 and the lower cover plate 212 are integrated.

As shown in Fig. 14, in some implementations, two ends of the pipeline 231 are respectively provided with connectors to fixedly connect a plurality of electrolyte sharing units to each other. One end of the pipeline 231 is provided with a connecting nozzle 231a, the other end of the pipeline 231 is provided with a connecting port 231b, the connecting nozzles 231a of two adjacent electrolyte sharing units are fixedly connected with the connecting ports 231b, and finally, a plurality of sections of pipelines 231 are spliced to form a long electrolyte sharing pipeline. In some implementations, the outer diameter of the connecting nozzle 231a is less than the inner diameter of the pipeline 231, and the inner diameter of the connecting port 231b is equal to or greater than the inner diameter of the pipeline 231. Considering the overall flatness, the outer diameter of the connecting port 231b is equal to the inner diameter of the pipeline 231. In order to ensure the air tightness of the pipeline 231 and prevent the electrolyte from leaking from the pipeline 231, the connector of the pipeline is provided with a sealing ring 234. For example, a circumference of the connecting nozzle 231a is provided with a sealing ring, and/or an inner circumference of the connecting port 231b is provided with a sealing ring 234. In order to ensure the sealing effect, more than one sealing ring may be provided.

In some implementations, the pipeline is a sleeve penetrating in a tunnel with a raised fixed base. The sleeve and the tunnel are staggered. For the convenience of understanding, the sleeve is set to have the same length as the tunnel, one end of the sleeve extends a certain length out of the tunnel, and a certain gap is reserved at the other end of the sleeve. By this design, a plurality of pipelines may be nested and spliced to each other. However, it should be pointed out that the same length of the sleeve and the tunnel is only for the convenience of understanding by those skilled in the art. In fact, the length of the sleeve is not specially limited and may be set according to actual conditions. Considering that the pipelines 231 in this solution need to be spliced, in order to make the arrangement of the battery shell 210 as compact as possible, the length of the sleeve and the length of the tunnel should be close to the thickness of the battery shell 210.

In some implementations, in order to simultaneously inject an electrolyte into an unformed battery directly through this solution to improve the uniformity of the battery, the sharing pipeline may not be provided with a sealing film. However, in other cases, if a vacuum environment needs to be maintained inside the battery, a sealing film needs to be arranged on the second through hole 214. When the electrolyte is injected into the battery through the sharing pipeline, the sealing film on the second through hole 214 is dissolved when encountering the electrolyte, the second through hole 214 is opened, and the electrolyte enters the battery shell 210. In some cases, there is a certain amount of electrolyte in the battery, and the second through hole 214 is provided with a sealing film which is soluble in the electrolyte. In order to prevent the electrolyte in the battery from dissolving the sealing film in advance, a protective film which is insoluble in the electrolyte needs to be attached to the sealing film. The protective film may also achieve an effect of sealing the second through hole 214. As the electrolyte dissolves the sealing film, the protective film attached to the sealing film falls off, and the electrolyte enters the battery shell 210. The sealing film may be arranged on the second through hole 214, or may also be arranged on the first through hole or the fourth through hole. In order to seal the channel for the electrolyte to flow into the shell, the position of the sealing film may be adjusted adaptively according to the change in assembly or material. In some implementations, the lower cover plate 212 is also provided with a fixed part of the electrolyte sharing unit 230 along the periphery to ensure more secure fixation between sharing pipelines.

### Embodiment 7

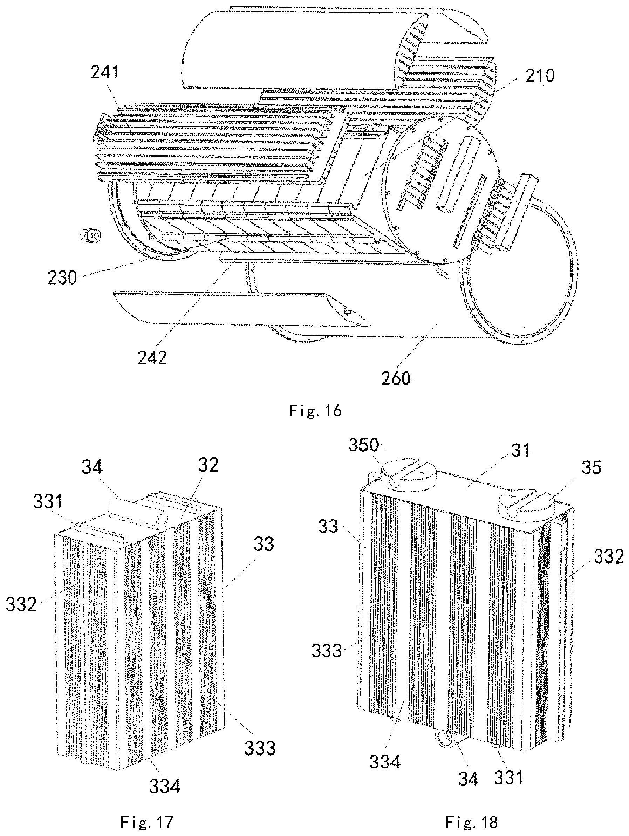

As shown in Fig. 16, this embodiment provides a large-capacity battery, including a battery outer shell 260, a positive pole 241, a negative pole 242 and a plurality of battery cells stacked in the battery outer shell 260. The battery cell includes the battery shell 210 described in Embodiment 6 and a pouch battery core arranged in the battery shell. As shown in Fig. 12, the specific structure of the above battery shell 210 is detailed in Embodiment 6. In this embodiment, the positive pole 241 and the negative pole 242 are arranged on two sides of the battery shell 210 and extend along an extension direction of the stacked battery shell 210. The battery shell 210 is also provided with an electrolyte sharing unit 230. The electrolyte sharing unit is also provided with an explosion venting assembly for the large-capacity battery.

### Embodiment 8

Fig. 17 and Fig. 18 are schematic structural diagrams of a battery shell provided in this embodiment. The battery shell is used for a built-in electrode assembly and forms a battery pack for a large-capacity battery. The battery shell is enclosed by an upper cover plate 31, a lower cover plate 32 and a barrel 33, the upper cover plate 31 is provided with poles 35, and the lower cover plate 32 is provided with a pipeline 34.

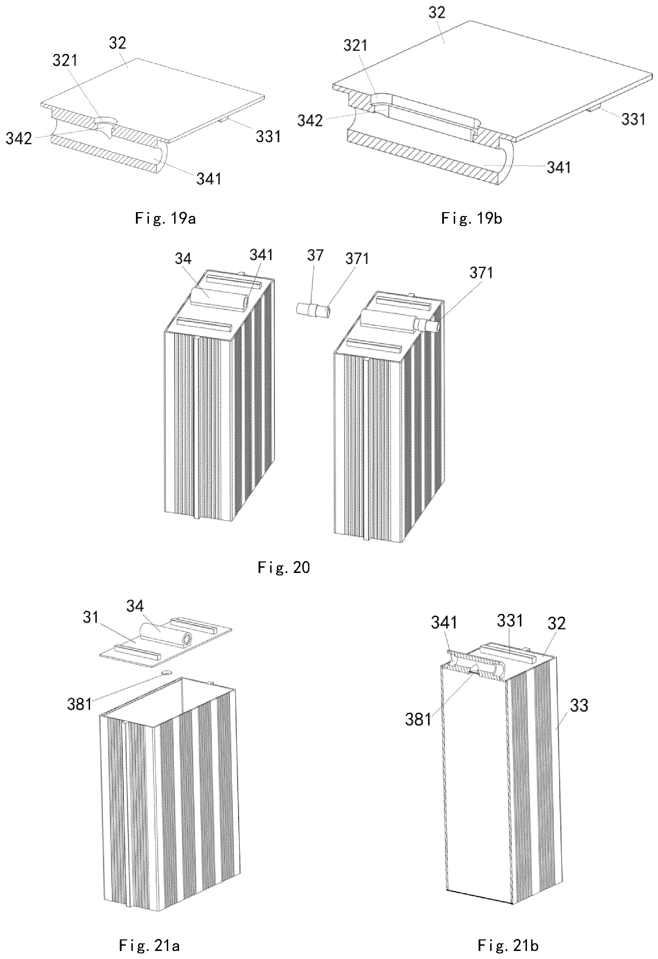

As shown in Fig. 19a and Fig. 19b, the lower cover plate 32 is provided with a first through hole 321 and is also provided with a pipeline 34 covering the first through hole 321 and extending along a width direction of the lower cover plate, the pipeline 34 is provided with a second through hole 342, and the first through hole 321 communicates with the second through hole 342. As shown in Fig. 19a, the first through hole 321 and the second through hole 342 are respectively circular holes or may also be strip-shaped through holes as shown in Fig. 19b. In some implementations, the pipeline 34 and the lower cover plate 32 are integrated, and at this time, the first through hole and the second through hole are combined into one through hole.

In some implementations, the pipeline is arranged on the barrel of the battery shell and extends along a length or width direction of the lower cover plate. In other implementations, the pipeline is arranged on the lower cover plate of the battery shell and extends along a length direction of the lower cover plate.

When the battery cells are assembled into a battery pack, the pipelines 34 are spliced to form a communicated channel to serve as an explosion venting channel of the battery pack. Moreover, one end of the explosion venting channel is provided with a blocking component for closing the explosion venting channel, and the other end of the explosion venting channel is used as an outlet of fumes. During thermal runaway of any battery cell, thermal runaway fumes in the shell sequentially pass through the first through hole 321 and the second through hole 342 and are discharged to the explosion venting channel composed of the pipelines 34, and are discharged from the fume outlet of the explosion venting channel. Alternatively, a fume processing device is arranged at the fume outlet so as to cool and adsorb the thermal runaway fumes or ignite the thermal runaway fumes.

In an embodiment, an explosion venting assembly may also be arranged at the fume outlet, and the explosion venting assembly is provided with a detachable port. The explosion venting channel composed of the pipelines 34 may also be used as an electrolyte sharing channel of the battery pack, one end is provided with a blocking component for closing the electrolyte sharing channel, and the other end is injected with an electrolyte through the detachable port. The electrolyte injected through the port sequentially passes through the second through hole 342 and the first through hole 321 and then enters the battery shell, and all battery cells in the battery pack are in a unified electrolyte environment, so that the uniformity of the electrolyte in the battery pack may be effectively improved. The electrolyte sharing channel may also be configured to replenish or replace an electrolyte for the battery pack. When the battery pack is used for more than a certain period of time and the electrolyte is lost, extracting the electrolyte and replacing the electrolyte with a new electrolyte or directly replenishing a new electrolyte are favorable for prolonging the service life of the battery pack. After electrolyte injection, the explosion venting assembly is restored for discharging the thermal runaway fumes.

As shown in Fig. 20, in some implementations, the pipelines 34 are connected and fixed through a connector 37 to form an explosion venting channel and/or an electrolyte sharing channel. The outline sizes of the connector 37 are equivalent to the outline sizes of the pipeline 34, thereby being favorable for improving the stability of connection between the pipelines 34. In an embodiment, the connector 37 includes two connecting nozzles 371, two ends of the pipeline 34 are provided with connecting ports 341, and the connecting nozzle 371 is embedded in the connecting port 341 for sealed connection; or the connector includes two connecting ports, two ends of the pipeline are provided with connecting nozzles, and the connecting nozzle is embedded in the connecting port for sealed connection. The preferred shape of the connecting nozzle is a micro-conical shape, so that the connecting nozzle may be inserted into the connecting port conveniently. In an embodiment, the connecting nozzle is in interference fit with the connecting port, and the connecting nozzle is riveted with the connecting port. During riveting, an epoxy adhesive or other adhesives may also be added to a riveting surface to further improve sealing and fixing effects. Alternatively, the connecting nozzle is in threaded connection with the connecting port.

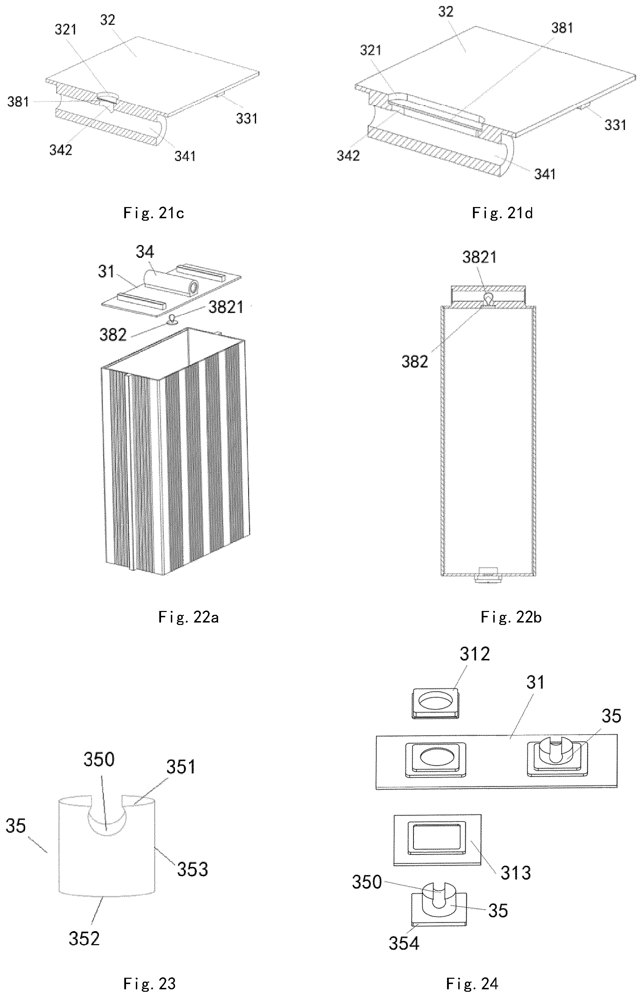

In some implementations, as shown in Fig. 21a, Fig. 21b, Fig. 21c and Fig. 21d, the first through hole 321 or the second through hole 342 is provided with a sealing film 381. The sealing film 381 has two use conditions. If the sealing film is used as an explosion venting film, during thermal runaway of the battery cell, thermal runaway fumes enter the explosion venting channel composed of the pipelines 34 after bursting or melting the sealing film 381. If the sealing film is used as an electrolyte injection sealing film, the sealing film 381 may be dissolved when encountering an electrolyte to isolate the electrode assembly from the air before battery formation and capacity division, and a layer of protective film is attached to a side of the sealing film 381 facing the inside of the shell to prevent the electrolyte in the battery from dissolving the sealing film 381 in advance. When the electrolyte needs to be injected, the electrolyte enters the electrolyte sharing channel composed of the pipelines 34, and after the sealing film 381 is dissolved when encountering the electrolyte, the protective film attached to the sealing film 381 also subsequently falls off, so that the electrolyte may enter the battery shell to achieve the effect of electrolyte communication of each battery cell in the battery pack. This manner avoids the use of other tools and has low requirements for the operating environment. As long as the electrolyte sharing channel is sealed in time after the electrolyte is injected, it may be ensured that the electrolyte and the electrode assembly are not exposed to the air.

As shown in Fig. 22a and Fig. 22b, the first through hole 321 or the second through hole 342 is provided with a sealing sheet 382, and the sealing sheet 382 is provided with a traction ring 3821. During assembly of a battery pack, traction wires are used to thread the traction rings 3821. Before electrolyte injection, by pulling the traction wires threading all traction rings 3821, the sealing sheet 382 of each battery cell is torn off, and then, all battery cells form openings to uniformly inject the electrolyte into all battery cells, thereby achieving the effect of electrolyte communication of each battery cell in the battery pack. This operation should be completed in a vacuum environment to prevent the battery assembly from being exposed to the air.

Fig. 23 and Fig. 24 are schematic structural diagrams of a pole of a battery shell provided in this embodiment. In this embodiment, a pole 35 is a cylinder, the cylinder includes a first end surface 351, a second end surface 352 and a side wall 353, and the first end surface 351 or the side wall 353 is at least provided with one through groove 350 to mount a heat transfer pipe, that is, an opening of the through groove 350 is located on the first end surface 351 or the side wall 353. The first end surface 351 is provided with an electrical connection region, and the second end surface 352 is configured to provide a conductive connection seat 354 for electrical connection with the electrode assembly in the battery shell.

As shown in Fig. 24, the pole 35 is fixed on the upper cover plate 31. In order to ensure insulation between the pole and the upper cover plate 31, a first insulating component 312 and a second insulating component 313 are also provided. The first insulating component 312 is arranged above the upper cover plate 31, the second insulating component 313 is arranged below the upper cover plate 31, and the pole 35 sequentially passes through the second insulating component 313, the upper cover plate 31 and the first insulating component 312 and then is fixed on the upper cover plate 31.

As shown in Fig. 24, the conductive connection seat 354 in this embodiment is specifically a conductive connection sheet with a thickness of 2-3 mm and a rectangular shape, and different shapes may also be set according to different needs. The conductive connection seats of the positive pole and the negative pole are made of different materials. For example, the positive pole is made of an aluminum sheet, and the negative pole is made of a copper sheet. If the pole is made of an aluminum material, the conductive connection seat 354 and the positive pole may be integrally formed, and the conductive connection seat 354 and the negative pole may be fixed by welding or clamping. The specific fixing manner varies according to different materials selected for the pole or the conductive connection sheet. A layer of copper sheet may be added to the integrally formed pole and conductive connection sheet made of an aluminum material as a conductive connection sheet of the negative pole.

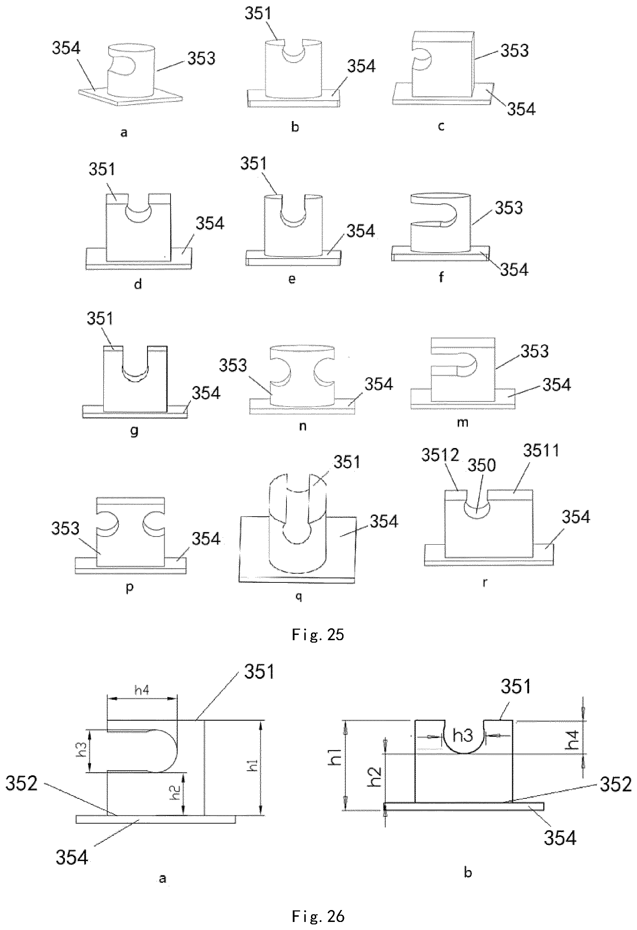

Fig. 25 and Fig. 26 are schematic structural diagrams after multiple structures of poles and conductive connection seats are connected in this embodiment. In the schematic structural diagrams of a pole a and a pole b as shown in Fig. 26, the height of the pole is h1, the distance between the lowest point of the through groove and the second end surface 352 is h2, the widest point of the through groove is h3, and the depth of the through groove is h4. In different implementations, the cross section of the through groove 350 is C-shaped or U-shaped. In the schematic structural diagrams of a pole a, a pole b, a pole c, a pole **d,** a pole n, a pole p, a pole q and a pole r as shown in Fig. 25, the cross section of the through groove is C-shaped, and the opening width is less than the widest point h3 of the through groove. This design is favorable for interference clamping of the heat transfer pipe in the through groove 350. The radians formed at two ends of the C-shaped through groove have natural tension, which is favorable for tightly clamping the heat transfer pipe in the through groove. In the schematic structural diagrams of a pole e, a pole f, a pole g and a pole m as shown in Fig. 25, the cross section of the through groove is u-shaped, and the opening width is slightly less than the widest point h3 of the through groove. This design is convenient for placing the heat transfer pipe, and may provide a sufficient operating space for special tools to flatten the heat transfer pipe or more tightly attach the heat transfer pipe to the through groove.

In the schematic structural diagrams of a pole b, a pole **d,** a pole e, a pole g and a pole q as shown in Fig. 25, the through groove 350 may be arranged on the first end surface 351 of the pole. At this time, except for the gap at the opening of the through groove, the first end surface 351 is completely used as an electrical connection region for connection with an electrode plate. In the schematic structural diagrams of a pole a, a pole c, a pole f and a pole m as shown in Fig. 25, the through groove 350 may be arranged on the side wall 353 of the pole. At this time, the first end surface 351 is completely used as an electrical connection region for connection with an electrode plate. In the schematic structural diagrams of a pole n and a pole p as shown in Fig. 25, when the opening of the through groove 350 is located on the side wall 353, two through grooves may be arranged on the side wall of the pole simultaneously, so as to increase the placing number of heat transfer pipes and improve the heat transfer efficiency of the pole.

The area of the electrical connection region is too small, which reduces the current carrying area of the pole and increases the temperature of the pole. In some implementations, in order to increase the area of the electrical connection region, the through groove 350 is eccentrically arranged. In the schematic structural diagram of a pole r as shown in Fig. 25, the through groove 350 divides the first end surface into a first region 3511 and a second region 3512, the first region 3511 is an electrical connection region, and the area of the first region 3511 accounts for not less than 50% of the area of the first end surface. This design may effectively increase the area of the electrical connection region and increase the current carrying area. It should be noted that the area of the first end surface includes the missing area due to the opening of the through groove, that is, the area of the first end surface is equivalent to the area of the second end surface.

In the schematic structural diagrams of a pole a, a pole c, a pole q and a pole r as shown in Fig. 25, the horizontal cross section of the pole may be circular, rectangular or track-shaped, poles of different shapes may be selected according to different battery models, and other shapes may also be used. This embodiment will not be exhaustive.

Fig. 26 shows schematic diagrams of size definition of the poles in this embodiment. The second end surface 352 of the pole is close to the electrode assembly, so the second end surface 352 is closer to the electrode assembly inside the battery, and the heat transfer pipe should be arranged as close as possible to the second end surface 352. In order to adapt to most square batteries commonly used on the market, in this embodiment, the height h1 of the pole is 20-25 mm, and the distance h2 between the lowest point of the through groove and the second end surface 352 of the pole is 7-12 mm. This arrangement may make the heat transfer pipe as close as possible to the inside of the battery for heat transfer. When the diameter of the heat transfer pipe is excessively less than that of the through groove, the contact is not tight. When the diameter of the heat transfer pipe is excessively greater than that of the through groove, the heat transfer pipe is difficult to mount. Therefore, the ratio of the diameter of the heat transfer pipe to the widest point h3 of the through groove is (1:1.05)-(1:1.1). For example, the diameter of the heat transfer pipe is φ10, the size of the diameter is 10 mm, and the widest point h3 of the through groove is 10.5-11 mm, so that the heat transfer pipe may be conveniently placed in the through groove and then tightly pressed and closely attached to the through groove to improve the heat transfer efficiency.

In some implementations, in the schematic structural diagram of a pole b as shown in Fig. 26, the depth h4 of the through groove is less than the diameter of the heat transfer pipe, so that the heat transfer pipe slightly protrudes out of the surface of the pole, which is favorable for tightly pressing and flattening the heat transfer pipe to enable the heat transfer pipe to be in close contact with the through groove. In some implementations, the surface of the through groove is provided with an insulating layer which may be coated with an insulating material or pasted with a silicone layer, a rubber layer and the like, or an insulating layer may be arranged on the heat transfer pipe to enable the heat transfer pipe made of a metal material and the pole to be mounted in an insulated manner.

In this present invention, by arranging the through groove on the pole and placing the heat transfer pipe in the through groove, the temperature inside the pole and the battery may be effectively controlled. In an embodiment, the first end surface of the pole is provided with an electrical connection region, so that an electrode plate may be mounted on the electrical connection region to achieve serial connection or parallel connection of a plurality of battery cells. This present invention is simple in structure, strong in practicability and easy to operate, may balance the heat of the battery pack, has a good heat dissipation effect, and has low cost.

The following is a summary analysis of performance parameters of the battery pack using the pole provided in this present invention at 20±5°C during battery charging and discharging processes after cooling with a heat pipe and a TEC refrigerator:

As shown in Table 1, with reference to Fig. 26, the part marked with h2 is the distance between the deepest point of the groove and the second end surface. After the heat transfer pipe is placed, the temperature of the battery and the pole is tested by a temperature tester. It is found that with the change of the value of h2, the temperature of the pole of the battery and the shell changes accordingly. When h2 is less than 7 mm, after the pole and the upper cover assembly are assembled, the space for mounting the heat transfer pipe is insufficient, so it is not considered. When h2 is greater than 13 mm, although the temperature of the pole decreases compared to when the pole of this present invention is not used, the temperature of the battery no longer continues to decrease. As the value of h2 increases, within the range of 7-12 mm, the temperature of the pole is not higher than 34°C, and the temperature measured on the surface of the battery shell is also about 36°C. For overall temperature control, compared to conventional pole batteries on the market without using the poles of this present invention, the temperature of the pole is reduced by at least 19.2%, and the surface temperature of the battery shell is reduced by at least 4.7%, thereby effectively reducing the overall temperature of the battery, significantly reducing the temperature of the pole, and greatly improving the safety performance.

**Table 1 Surface temperature of battery pole and battery shell under different sizes of through grooves**

| h2 height (mm) | Comparative Example | 7 | 8 | 9 | 10 | 11 | 12 | 13 | 14 |
|---|---|---|---|---|---|---|---|---|---|
| | Conventional pole on the market | | | | | | | | |
| Surface temperature of pole (°C) | 42 | 29.3 | 30.8 | 31.8 | 32.5 | 33.2 | 33.9 | 35.1 | 36.4 |
| Surface temperature of battery shell (°C) | 38 | 33.9 | 34.2 | 34.6 | 35.1 | 35.6 | 36.2 | 36.4 | 36.6 |

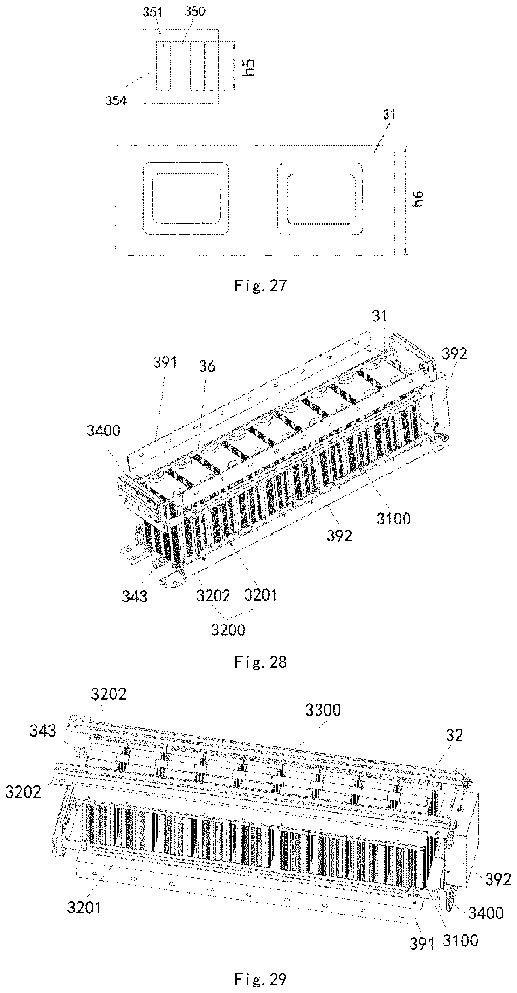

As shown in Table 2, with reference to Fig. 27, the ratio of the length h5 of the through groove to the width h6 of the cover plate has a significant impact on the temperature of the battery pole. When h2 is fixed at 7 mm, the larger the attaching area between the heat transfer pipe and the pole, the better the heat transfer and heat dissipation effects, but the maximum length should not exceed the width of the cover plate. After testing the temperature of the poles during 1C charging and discharging of batteries for different lengths of through grooves, compared to the poles of conventional batteries on the market without using the poles of this present invention, it may be seen that the surface temperature of the pole is reduced by at least 20.2%. In this present invention, the temperature of the pole is significantly reduced, the safety performance is greatly improved, the ratio of the length h5 of the through groove to the width h6 of the cover plate is preferably (0.7:1)-(0.9:1), the cooling effect is good, the energy is saved, and the environment is protected.

**Table 2 Surface temperature of battery pole under different sizes of through grooves**

| h5:h6 | Comparative Example | 0.5:1 | 0.6:1 | 0.7:1 | 0.8:1 | 0.9:1 |
|---|---|---|---|---|---|---|
| Temperature of pole (°C) | 42 | 33.5 | 32.6 | 31.1 | 30.4 | 29.8 |

As shown in Fig. 17 and Fig. 18, the lower cover plate 32 is also provided with a first battery mounting seat 331 along a width direction thereof, and the side wall of the barrel is also provided with a second battery mounting seat 332 along a height direction thereof. When battery cells are assembled into a battery pack, the battery cells may be fixed on the mounting seats through mounting components to form the battery pack, and the base is provided with threaded holes for fixing. An outer surface of the barrel 33 is provided with a plurality of heat dissipation grooves 333 extending along a height direction thereof to facilitate heat dissipation of the battery shell. The barrel 33 is also provided with a plurality of reinforcing ribs 334 extending along a height direction thereof to improve the compressive strength of the barrel. The lower cover plate 32 and the pipeline 34 are integrally formed aluminum extrusion components. The barrel 33 is also an aluminum extrusion component. The upper cover plate 31, the lower cover plate 32 and the barrel 33 are fixed by laser welding. The fixing manner is economical and convenient and has good effects.

### Embodiment 9

This embodiment provides a battery cell, including the battery shell described in Embodiment 8. Fig. 28 and Fig. 29 are schematic structural diagrams of a large-capacity battery provided in this embodiment. The large-capacity battery includes a plurality of the above battery cells 3100. The large-capacity battery includes a plurality of battery cells 3100, a connecting assembly 3200, a sharing pipeline assembly 3300 and a heat transfer assembly 3400. The plurality of battery cells 3100 are connected in parallel. The connecting assembly 3200 is configured to fixedly connect a plurality of battery cells 10 side by side to form a battery pack. The sharing pipeline assembly 3300 is configured to completely communicate inner cavities inside the plurality of battery cells 10, so that all battery cells 3100 in the battery pack are located in one electrolyte system. The heat transfer assembly 3400 is configured to be fixedly connected to the poles on the same sides of the plurality of battery cells 3100, so as to achieve heat exchange between all battery cells 3100 in the battery pack and the outside.

The sharing pipeline assembly 3300 includes an electrolyte injection pipeline and a plurality of sealing mechanisms. Each battery cell 3100 communicates with the electrolyte injection pipeline through an opening of the battery cell 3100. One end of the electrolyte injection pipeline is used as a main electrolyte injection port, and the other end of the electrolyte injection pipeline is closed. The sealing mechanism is arranged at the opening of the battery cell 3100 to achieve a sealing effect on the battery cell 3100. The sealing mechanism is dissolved when encountering an electrolyte or is opened under the action of an external force, so as to achieve communication of the electrolyte injection pipeline and a battery cell electrolyte cavity. Due to the arrangement of the electrolyte injection pipeline and the sealing mechanism, before capacity division of the battery pack, the electrode assembly of the battery cell is kept to not contact with the air. When the electrolyte needs to be injected, the sealing mechanism is removed, and then, the electrolyte is injected uniformly to create a uniform condition for injecting the electrolyte.

The main electrolyte injection port of the electrolyte injection pipeline is provided with a detachable explosion venting assembly 343, and a blocking component is used at the closed end of the electrolyte injection pipeline. Due to the arrangement of the explosion venting assembly 343, the sharing pipeline assembly may be simultaneously used as an explosion venting channel. During thermal runaway of any battery cell, the electrolyte injection pipeline is used as the explosion venting channel, so that thermal runaway fumes are discharged through the explosion venting assembly.

In some implementations, the connecting assembly is a fixed shell, and a plurality of battery cells are fixedly arranged in the fixed shell side by side. Alternatively, as shown in Fig. 17 and Fig. 18, the connecting assembly 3200 includes an assembly strip 3201 and an assembly base 3202. The assembly strip 3201 is fixedly connected to the side wall of the barrel of the battery cell 3100 to fix the plurality of battery cells 3100 placed side by side as a whole. The assembly base 3202 is located below the plurality of battery cells 3100 placed side by side, and is fixedly connected to the lower cover plate 32 of the battery cell 3100.

In some implementations, as shown in Fig. 28 and Fig. 29, the battery pack is also provided with an electrical connector 391 and a battery management system 392. Due to the arrangement of the electrical connector 391, the battery packs may be connected in series. The battery management system 392 is arranged at one end of the battery pack, and is electrically connected to the electrical connector 391 through an electrical connection wire (the electrical connection wire is not shown in the figures).

### Embodiment 10

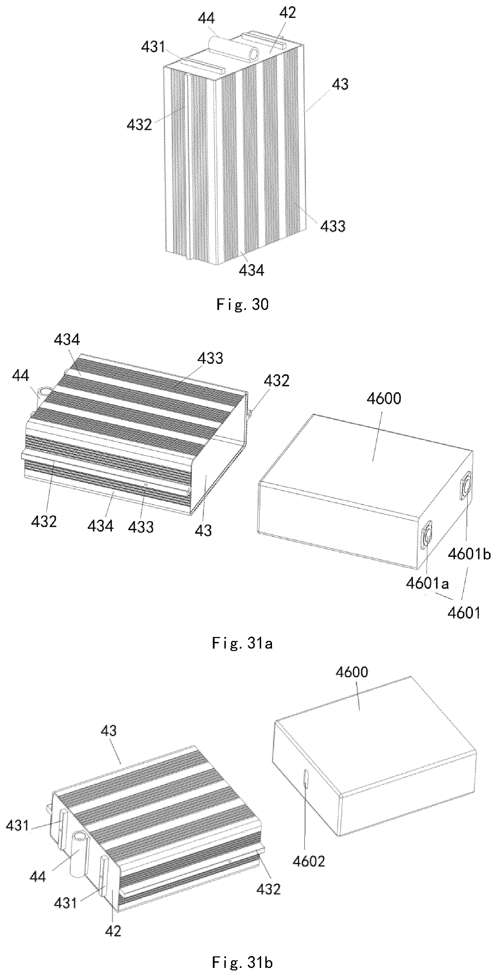

Fig. 30 is a schematic structural diagram of a battery cell A in this embodiment from a different perspective. With reference to Fig. 31a and Fig. 31b, it may be seen that the battery cell A in this embodiment includes a battery shell, a finished battery core and a sealing assembly. The battery shell includes a lower cover plate 42 and a barrel 43, two ends of the barrel 43 are open ends, and the lower cover plate 42 is sealed and fixed at one end of the barrel 43. Specifically, the barrel 43 and the lower cover plate 42 may be processed by an extrusion technology, and then, the lower cover plate 42 and the barrel 43 are fixed by laser welding. In other embodiments, the lower cover plate 42 and the barrel 43 may also be integrally formed.

With reference to Fig. 19a and Fig. 19b, it may be seen that the lower cover plate 42 is provided with a first through hole and a pipeline 44 extending along a width direction of the lower cover plate 42, and a side wall of the pipeline 44 is provided with a second through hole communicating with the first through hole. The first through hole and the second through hole may be respectively circular holes as shown in Fig. 19a or may also be strip-shaped holes as shown in Fig. 19b. From the perspective of the processing technology and cost, the extrusion technology may be used to manufacture the pipeline 44 and the lower cover plate 42 once. Compared to the pipeline 44 and the lower cover plate 42 which are arranged separately, the one-time forming technology improves the air tightness between the pipeline 44 and the lower cover plate 42, and the extrusion technology is mature and may also reduce the processing cost. It should be noted that the pipeline 44 may also be arranged on other parts of the battery shell, for example, the side wall of the barrel 43. That is, multiple parts on the battery shell of the battery cell A may be provided with the first through hole and the pipeline 44 extending along the width or length direction of the battery shell, and the side wall of the pipeline 44 is provided with a second through hole communicating with the first through hole.

The finished battery core is a finished square battery core 4600, for example, a common 280Ah battery on the market, the shell thereof is usually made of aluminum and has a sealed inner cavity, the inner cavity contains an electrolyte, and at least one set of electrode assemblies are arranged in the inner cavity. The bottom of the shell of the finished square battery core 4600 is provided with an opening 4602 communicating with the first through hole and the second through hole. The shape of the opening 4602 may be consistent or inconsistent with the shape of the first through hole and the shape of the second through hole, and is preferably consistent with the shape of the first through hole and the shape of the second through hole, so as to improve the air tightness between the finished square battery core 4600 and the battery shell.

The sealing assembly is configured to seal the opening 4602, the first through hole or the second through hole. Based on different sealing parts, when a battery pack is formed, there are two assembly manners as follows:
Manner 1: First, the bottom of the shell of the finished square battery core 4600 is provided with an opening 4602, and then, the opening 4602 is sealed with a sealing assembly for later use. In an embodiment, in an environment with a dew point standard of -25 to 40°C, humidity less than or equal to 1%, temperature of 23°C±2°C, and cleanliness level of 100000, an opening 4602 is provided and sealed with a sealing assembly. Secondly, with reference to Fig. 30, Fig. 31a and Fig. 31b, the above processed finished square battery core 4600 is assembled inside the battery shell, and the opening 4602 with a sealing mechanism 4500 corresponds to the first through hole and the second through hole, so as to ensure that after the sealing assembly is opened, the opening 4602 communicates with the first through hole and the second through hole. Then, the open end of the battery shell and the top of the finished square battery core 4600 (the end where the pole of the finished battery core is located is the top) are sealed and fixed with a sealant or by welding, the original top of the finished square battery core 4600 is retained, that is, an original positive pole 4601a, an original negative pole 4601b, an original electrolyte injection hole and the like of the finished square battery core are retained, and finally, a battery cell A is formed.
Manner 2: First, the sealing assembly is fixed on the first through hole or the second through hole, and the first through hole or the second through hole is sealed. Secondly, the bottom of the shell of the finished square battery core 4600 is provided with an opening 4602. In an embodiment, in an environment with a dew point standard of -25 to 40°C, humidity less than or equal to 1%, temperature of 23°C±2°C, and cleanliness level of 100000, an opening 4602 is provided. Finally, in an environment with a dew point standard of -25 to 40°C, humidity less than or equal to 1%, temperature of 23°C±2°C, and cleanliness level of 100000, the finished square battery core 4600 with the opening 4602 is assembled inside the battery shell, and the opening 4602 corresponds to the first through hole and the second through hole, so as to ensure that after the sealing mechanism is opened, the opening 4602 communicates with the first through hole and the second through hole. Then, the open end of the battery shell and the top of the finished square battery core 4600 (the end where the pole of the finished battery core is located is the top) are sealed and fixed with a sealant or by welding, the original top of the finished square battery core 4600 is retained, that is, an original positive pole 4601a, an original negative pole 4601b, an original electrolyte injection hole and the like of the finished square battery core are retained, and finally, a battery cell A is formed.

In other embodiments, the finished square battery core 4600 may also be provided with an opening which may be opened, and before a battery pack is formed, a sealing device on the opening is disassembled for use. In order to facilitate the fixed mounting of the assembled battery pack, as shown in Fig. 31a and Fig. 31b, the battery cell is provided with a first mounting seat 431 and a second mounting seat 432. The first mounting seat 431 is configured to be fixed on the base of the battery pack. The second mounting seat 432 is configured to fix each battery cell through a fixing component to form the battery pack. The second mounting seat 432 is also provided with fixed holes 433 for screw hole mounting. In order to enhance the pressure resistance of the barrel, a plurality of reinforcing ribs 434 are also arranged along a height direction of the barrel.

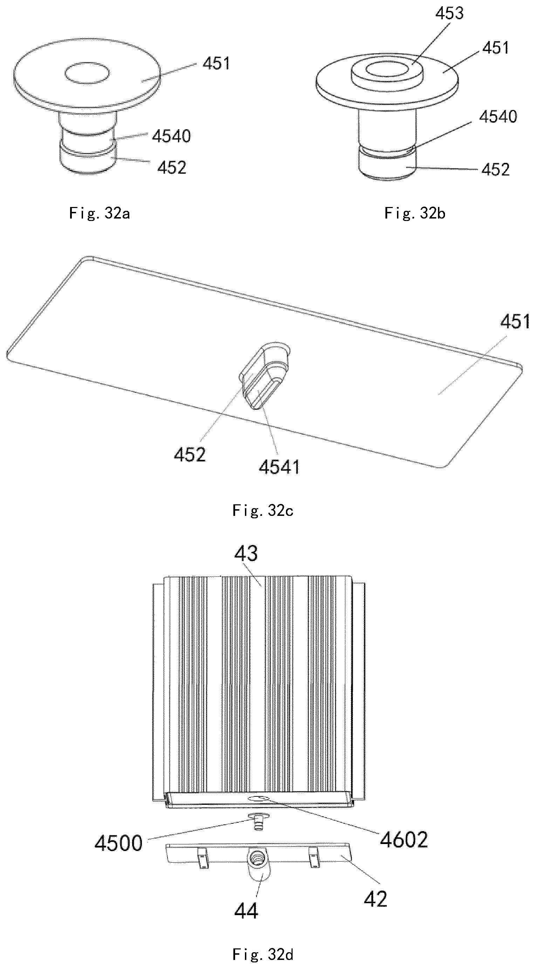

In this embodiment, the sealing mechanism 4500 as shown in Fig. 32a may be used as a sealing assembly. In this embodiment, the sealing mechanism 4500 includes a fixed part 451 and an electrolyte injection part 452. The fixed part 451 is a sheet structure provided with a third through hole to fix the fixed part 451 on the opening 4602 or the first through hole or the second through hole. The electrolyte injection part 452 is a hollow tubular structure provided with an open end and a closed end, the open end is fixed on the third through hole to enable the electrolyte injection part 452 to communicate with an inner cavity of the finished square battery core 4600, and the closed end is configured to inject an electrolyte into the inner cavity of the finished square battery core 4600 after being opened under the action of an external force.

As shown in Fig. 32b, in order to facilitate the fixation of the sealing mechanism 4500 on the opening 4602, the first through hole or the second through hole, a positioning part 453 protruding from the third through hole is also arranged on the sealing mechanism 4500, and the positioning part 453 may be inserted into the opening 4602, the first through hole or the second through hole to accurately mount the sealing mechanism 4500, thereby avoiding position deviation which may cause liquid leakage. As shown in Fig. 32c, in order to enable the sealing mechanism 4500 to be opened more easily, the sealing mechanism 4500 is provided with a weak groove 4540 or a weak end 4541, so that when the sealing mechanism 4500 is opened with an external tool, the sealing mechanism 4500 may be opened more easily.

When the sealing mechanism 4500 is a metal component, the sealing mechanism 4500 is fixed by welding. When the sealing mechanism 4500 is a plastic component, the sealing mechanism 4500 is fixed by bonding. As shown in Fig. 32d, if the sealing mechanism 4500 having the above structure is assembled based on the above manner 1, when the finished square battery core 4600 provided with the sealing mechanism 4500 is placed in the battery shell, it is necessary to ensure that the electrolyte injection part 452 of the sealing mechanism 4500 passes through the first through hole and the second through hole and extends into the pipeline 44. The first method of assembling the sealing mechanism 4500 having the above structure based on the above manner 2 is as follows: when the sealing mechanism 4500 is fixed on the first through hole, it is necessary to ensure that the electrolyte injection part 452 of the sealing mechanism 4500 passes through the second through hole and extends into the pipeline 44. The second method of assembling the sealing mechanism 4500 having the above structure based on the above manner 2 is as follows: when the sealing mechanism 4500 is fixed on the second through hole, it is necessary to ensure that the electrolyte injection part 452 of the sealing mechanism 4500 extends into the pipeline 44.

In other embodiments, the sealing film as shown in Fig. 21a to Fig. 21c may also be used as a sealing assembly. Similarly, the sealing film may seal the opening or the first through hole or the second through hole. When the sealing film is used as an electrolyte injection sealing film, the sealing film may be dissolved when encountering an electrolyte to isolate the electrode assembly from the air before battery formation and capacity division, and a layer of protective film is attached to a side of the sealing film facing the inside of the battery shell to prevent the electrolyte in the battery from dissolving the sealing film in advance. When the electrolyte needs to be injected, the electrolyte enters the pipeline 44, and after the sealing film is dissolved when encountering the electrolyte, the protective film attached to the sealing film also subsequently falls off, so that the electrolyte may enter the inner cavity of the finished square battery core 4600 to achieve the effect of electrolyte communication of each finished square battery core 4600 in the battery pack. This manner avoids the use of other tools and has low requirements for the operating environment. As long as the electrolyte sharing channel is sealed in time after the electrolyte is injected, it may be ensured that the electrolyte and the electrode assembly are not exposed to the air. Different from the sealing mechanism 4500 as shown in Fig. 32a, the sealing film may also be used as an explosion venting film when being used as a battery cell. If the sealing film is used as an explosion venting film, during thermal runaway of the finished square battery core 4600, thermal runaway fumes enter the explosion venting channel composed of the pipelines 44 after bursting or melting the sealing film.

In other embodiments, the sealing sheet as shown in Fig. 22a and Fig. 22b may also be used as a sealing assembly, and the sealing sheet is provided with a traction ring. It should be noted that when the sealing assembly is fixed by any of the above assembly manners, it is necessary to ensure that the traction ring extends into the pipeline 44. During assembly of a battery pack, traction wires are used to thread traction rings of all battery cells A in the battery pack. Before electrolyte injection, by pulling the traction wires threading all traction rings, the sealing sheet of each finished square battery core 4600 is torn off, and then, the openings 4602 of all finished square battery cores 4600 are exposed to uniformly inject the electrolyte into all finished square battery cores 4600, thereby achieving the effect of electrolyte communication of each finished square battery core 4600 in the battery pack. This operation should be completed in a vacuum environment to prevent the battery assembly from being exposed to the air.

### Embodiment 11

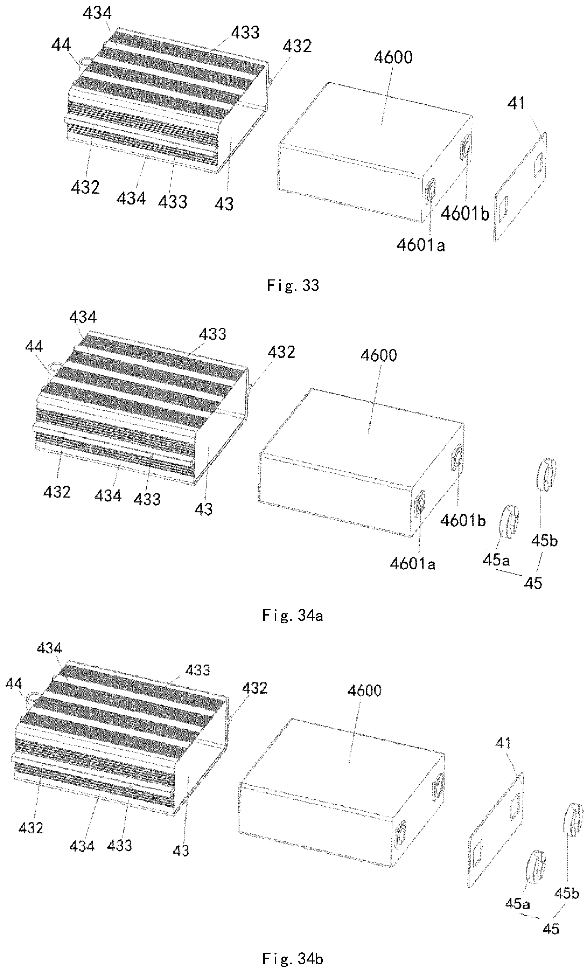

Different from Embodiment 10, as shown in Fig. 33, in this embodiment, the battery shell of the battery cell A also includes an upper cover plate 41, and the upper cover plate 41 is provided with a hole in a region corresponding to the pole of the battery cell. During assembly, the pole 4601 of the finished square battery core 4600 passes through the hole in the upper cover plate 41 to become the pole of the battery cell. After assembly, an outer edge of the upper cover plate 41 is sealed and fixed to the other end of the barrel 43, and simultaneously, the gap between the pole 4601 and the upper cover plate 41 needs to be sealed with a sealant or by welding.

### Embodiment 12

As shown in Fig. 34a, this embodiment provides a battery cell B. Different from the battery cell A in Embodiment 10, the positive pole 4601a and the negative pole 4601b of the finished square battery core 4600 are respectively provided with a positive terminal 45a and a negative terminal 45b (the positive terminal 45a and the negative terminal 45b may be collectively referred to as a terminal 45), the positive terminal 45a is electrically connected to the positive pole 4601a of the finished square battery core 4600, and the negative terminal 45b is electrically connected to the negative pole 4601b of the finished square battery core 4600.

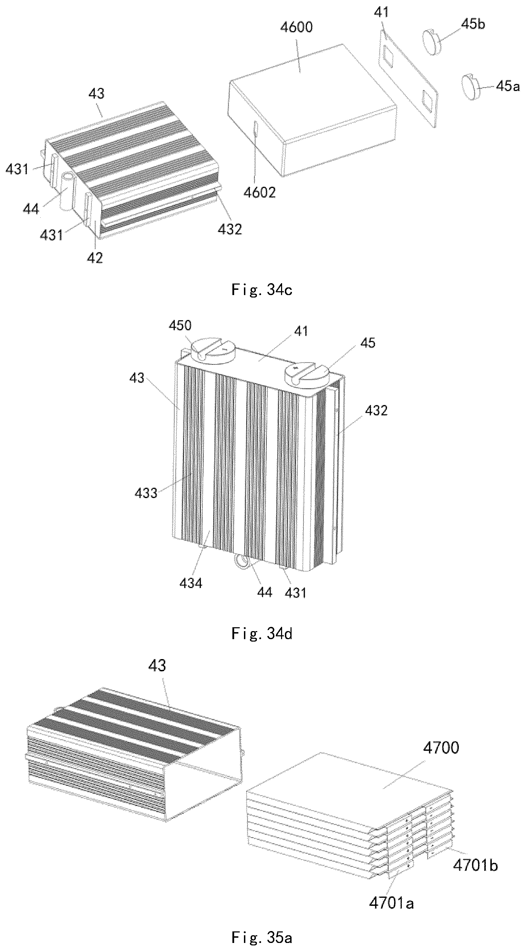

As shown in Fig. 34b and Fig. 34c, the battery cell B in this embodiment may also adopt another structural form. Compared to Embodiment 11, the upper cover plate 41 is provided with the terminal 45, including the positive terminal 45a and the negative terminal 45b, the positive terminal 45a is electrically connected to the positive pole 4601a of the finished square battery core 4600, and the negative terminal 45b is electrically connected to the negative pole 4601b of the finished square battery core 4600. When the electrolyte uniformity of each battery cell in the battery pack is poor, it may cause multiple problems, including abnormal battery heating, shortened service life, etc. The battery cell B may significantly improve the problems by sharing the electrolyte through the pipeline 44 arranged on the battery shell. Furthermore, by additionally providing the terminal 45 and optimizing the structure of the terminal 45 matched with a heat transfer pipe, the effect of heat balance of each battery cell in the battery pack may be further achieved, and the service life of the battery may be prolonged. The structure of the terminal 45 is described in detail below.

With reference to Fig. 34d, the terminal 45 is a cylinder, the cylinder includes a first end surface, a second end surface and a side wall, and the first end surface or the side wall is at least provided with one through groove 450 to mount a heat transfer pipe, that is, an opening of the through groove 450 is located on the first end surface or the side wall. The first end surface is also provided with an electrical connection region, and the second end surface is configured to provide a conductive connection seat or is electrically connected to the pole of the finished square battery core 4600 for electrical connection with the electrode assembly in the battery shell.

In this embodiment, the terminal 45 is preferably arranged on the upper cover plate 41 of the battery cell B. As shown in Fig. 24, the terminal 45 is fixed on the upper cover plate 41. In order to ensure insulation between the terminal 45 and the upper cover plate 41, a first insulating component and a second insulating component are also provided. The first insulating component is arranged above the upper cover plate 41, the second insulating component is arranged below the upper cover plate 41, and the terminal 45 sequentially passes through the second insulating component, the upper cover plate 41 and the first insulating component and then is fixed on the upper cover plate 41.

In some implementations, in order to facilitate electrical connection with the pole of the finished battery core, a conductive connection seat with a thickness of 2-3 mm and a rectangular shape is provided for the terminal 45, and different shapes may also be set according to different needs. The conductive connection seats of the positive terminal and the negative terminal are made of different materials. For example, the positive terminal is made of an aluminum sheet, and the negative terminal is made of a copper sheet. If the terminal is made of an aluminum material, the conductive connection seat and the positive terminal may be integrally formed, and the conductive connection seat and the negative terminal may be fixed by welding or clamping. The specific fixing manner varies according to different materials selected for the terminal or the conductive connection seat. A layer of copper sheet may be added to the integrally formed terminal and conductive connection seat made of an aluminum material as a conductive connection seat of the negative terminal.

In some implementations, the positive pole and the negative pole of the finished square battery core are provided with through grooves for placing heat transfer pipes, that is, the original pole of the finished square battery core is improved, the height of the pole is increased, and the end surface or the side wall of the pole is provided with a through groove to achieve technical effects similar to the battery cell B. By arranging the through groove on the terminal and placing the heat transfer pipe in the through groove, the temperature inside the terminal and the battery cell B may be effectively controlled. In an embodiment, the first end surface of the pole is provided with an electrical connection region, so that an electrode plate may be mounted on the electrical connection region to achieve parallel connection of a plurality of battery cells B. This present invention is simple in structure, strong in practicability and easy to operate, may balance the heat of the battery pack, has a good heat dissipation effect, and has low cost.

### Embodiment 13

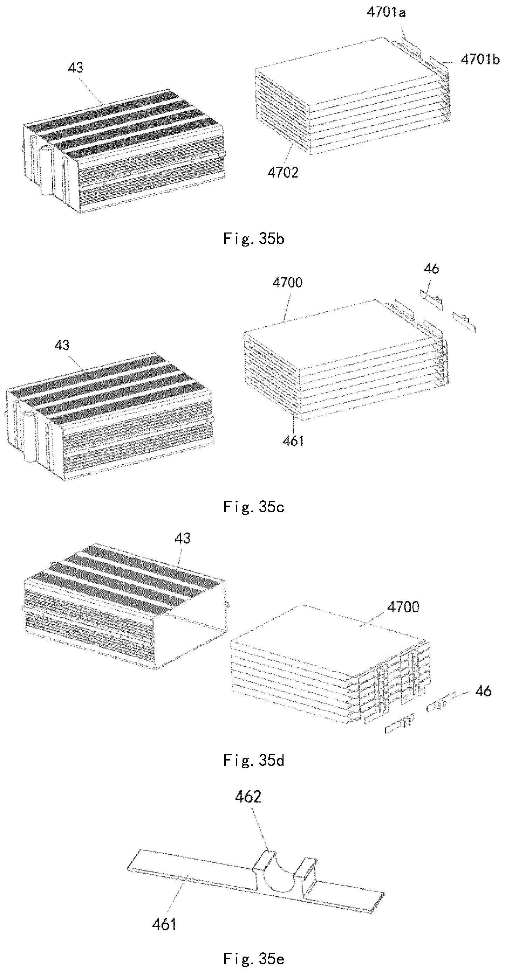

As shown in Fig. 35a and Fig. 35b, this embodiment provides a battery cell C. The difference between the battery cell C and the battery cell A in Embodiment 10 is that a plurality of finished pouch battery cores 4700 are used as finished battery cores. The shell of the finished pouch battery core 4700 is usually an aluminum-plastic film and has a sealed inner cavity, the inner cavity contains an electrolyte, and at least one set of electrode assemblies are arranged in the inner cavity. The bottom of the finished pouch battery core 4700 is provided with an opening 461.

Different from Embodiment 10, when the sealing mechanism 4500 is used in this embodiment, the sealing mechanism 4500 needs to be fixed on the lower cover plate for use. That is to say, when the sealing mechanism 4500 is used as a sealing assembly, only the manner 2 in Embodiment 10 may be used for assembly in this embodiment. After assembly, a positive tab 4701a and a negative tab 4701b of the finished pouch battery core 4700 are arranged outside the battery shell, the upper half sections of a plurality of finished pouch battery cores 4700 are sealed with a curing adhesive, and a certain gap or space is reserved in the lower half sections of the plurality of finished pouch battery cores 4700. Then, the top of the finished pouch battery core and the open end of the battery shell are sealed again to avoid the leakage of the electrolyte from the gap between the finished pouch battery cores to the outside of the battery shell after injection. All positive tabs 4701a of the finished pouch battery cores are connected in parallel, and all negative tabs 4701b of the finished pouch battery cores are connected in parallel, so as to serve as a positive electrode and a negative electrode of the battery cell C.

In this embodiment, when the sealing film is used as a sealing assembly, the sealing film is fixed on each opening or fixed on the lower cover plate for use. Any assembly manner in Embodiment 10 may be used to achieve assembly.

The finished pouch battery core 4700 in this embodiment may be provided with an opening which may be opened, and before a battery pack is formed, a sealing device on the opening is disassembled for use. In this embodiment, finished pouch battery cores and battery shells are used as battery cells, commercially available pouch battery cores may be fully utilized to achieve the purposes of prolonging the cycle life of the battery cell and improving the safety of the battery cell, the structure is simple, and the cost is low.

### Embodiment 14

As shown in Fig. 35c and Fig. 35d, this embodiment provides a battery cell D. The difference between the battery cell D and the battery cell C in Embodiment 13 is that each positive tab 4701a and each negative tab 4701b are provided with an electrical busbar 46 with a clamping groove, and the clamping groove is configured to clamp a heat transfer pipe. The positive tab 4701a and the negative tab 4701b are connected to the electrical busbar 46 one by one. After the battery cells D are used to form a battery pack, all electrical busbars are then electrically connected to a positive plate and a negative plate of the battery pack to achieve parallel connection of a plurality of battery cells.

As shown in Fig. 35e, the electrical busbar 46 includes a base 461 and a clamping groove 462, the clamping groove 462 is configured to fix a heat transfer pipe, and the base 461 is configured to be electrically connected to the tab of the battery cell and is further configured to be electrically connected to the electrode plate of the battery pack composed of large-capacity batteries. The clamping groove 462 is convexly arranged on the base 461, and the length of the clamping groove 462 in an axial direction is close to or the same as the width of the base plate. After the tab of the finished pouch battery core 4700 is bent, the bent surface is fixed on the side of the base 461 facing away from the clamping groove 462 and specifically may be fixed by welding. During use of the battery cell, the temperature of the tab is the highest. In order to improve the safety of the battery cell and the battery pack and prolong the service life of the battery, it is very important to cool the battery. Therefore, the length of the base should be as close as possible to the bent part of the tab, so as to enable the heat of the tab to be fully conducted to the electrical busbar, and further enable the heat transfer pipe to be in full contact with the electrical busbar to achieve the effect of cooling the tab by the heat transfer pipe. The device has a simple structure and a good cooling effect. Specifically, the clamping groove includes a pair of clamping teeth, and an opening is formed between the clamping teeth, so that the cross section of the clamping groove is C-shaped or Ω-shaped. The heat transfer pipe is clamped and fixed between the clamping teeth through the opening. The joint between the clamping teeth and the base is relatively thick, and the thickness gradually decreases until the opening.

In some implementations, an inner wall of the clamping groove is provided with an insulating layer for use in an insulated environment.

### Embodiment 15

This embodiment provides a large-capacity battery composed of a plurality of battery cells A provided in Embodiment 10 or Embodiment 11 connected in parallel, or composed of a plurality of battery cells C provided in Embodiment 13 connected in parallel. As shown in Fig. 20, the pipelines 44 are connected and fixed through a connector to form an explosion venting channel and/or an electrolyte sharing channel. The outline sizes of the connector are equivalent to the outline sizes of the pipeline 44, thereby being favorable for improving the stability of connection between the pipelines 44. In an embodiment, the connector includes two connecting nozzles, two ends of the pipeline 44 are provided with connecting ports, and the connecting nozzle is embedded in the connecting port for sealed connection; or the connector includes two connecting ports, two ends of the pipeline are provided with connecting nozzles, and the connecting nozzle is embedded in the connecting port for sealed connection. The preferred shape of the connecting nozzle is a micro-conical shape, so that the connecting nozzle may be inserted into the connecting port conveniently. In an embodiment, the connecting nozzle is in interference fit with the connecting port, and the connecting nozzle is riveted with the connecting port. During riveting, an epoxy adhesive or other adhesives may also be added to a riveting surface to further improve sealing and fixing effects. Alternatively, the connecting nozzle is in threaded connection with the connecting port.

When a plurality of battery cells provided with sealing assemblies are assembled into a battery pack, the pipelines 44 are spliced through connectors to form a communicated channel to serve as an electrolyte sharing channel of the battery pack. Moreover, one end of the electrolyte sharing channel is provided with a blocking component for closing the electrolyte sharing channel, and the other end of the electrolyte sharing channel is provided with a port detachably connected with other assemblies so as to mount an electrolyte injection assembly. Before the electrolyte injection assembly is mounted, a special tool is used to penetrate into the electrolyte sharing channel to form an opening in the sealing assembly, so as to enable inner cavities of all battery cells to communicate with the electrolyte sharing channel. After the electrolyte injection assembly is mounted, an electrolyte is injected into the electrolyte sharing channel through the electrolyte injection assembly, the electrolyte sequentially passes through the second through hole, the first through hole and the opening on the finished battery core and then enters the finished battery core, and In an embodiment, all battery cells in the battery pack are in a unified electrolyte environment, thereby effectively improving the uniformity of the electrolyte in the battery pack. After electrolyte injection, an explosion venting valve is mounted. The electrolyte sharing channel may also be configured to replenish or replace an electrolyte for the battery pack. When the battery pack is used for more than a certain period of time and the electrolyte is lost, the explosion venting valve is removed, and the electrolyte injection assembly is mounted. Two manners of extracting the electrolyte and replacing a new electrolyte or directly replenishing a new electrolyte are both favorable for prolonging the service life of the battery pack. When a plurality of battery cells are assembled into a battery pack, the pipelines 44 are spliced to form a communicated channel which may also serve as an explosion venting channel of the battery pack. Moreover, one end of the explosion venting channel is provided with a blocking component for closing the explosion venting channel, the electrolyte injection assembly at the other end of the explosion venting channel is replaced with an explosion venting assembly, or an explosion venting assembly with a detachable port is directly used as a fume outlet. During thermal runaway of any finished square battery core, thermal runaway fumes sequentially pass through the opening, the first through hole and the second through hole and are discharged to the explosion venting channel composed of the pipelines 44, and are discharged from the fume outlet of the explosion venting channel. Alternatively, a fume processing device is arranged at the fume outlet so as to cool and adsorb the thermal runaway fumes or ignite the thermal runaway fumes.

For the battery pack provided in this embodiment, the battery cells forming the battery pack are provided with openings and pipelines. The electrolyte sharing pipeline formed by splicing the battery cells may greatly improve the consistency of each battery cell in the battery pack, alleviate the problem of serious heating of the battery caused by poor electrolyte consistency, and prolong the number of cycles and service life of the battery pack, and is simple in structure and strong in applicability. By using commercially available finished square battery cores or pouch battery cores, the development difficulty and production cost may be reduced, and the mass production may be facilitated.

In order to fix the battery pack, a fixing component is provided during assembly. The fixing component includes an assembly strip and an assembly base. The assembly strip and the second mounting seat 432 on the battery cell are fixedly mounted, and the assembly base is fixed with the first mounting seat 431 on the battery cell and is fixedly connected to the fixed hole 433 through a bolt. The battery pack is also provided with two L-shaped electrode plates, wherein the positive plate is connected in parallel with positive terminals or positive tabs of all battery cells, and the negative plate is connected in parallel with negative terminals or negative tabs of all battery cells. The electrode plates are further used for serial connection between battery packs, that is, the positive plate of the first battery pack is connected in series with the negative plate of the second battery pack, and similarly, a plurality of battery packs are connected in series.

### Embodiment 16

This embodiment provides a large-capacity battery. The difference between the large-capacity battery in this embodiment and the large-capacity battery in Embodiment 15 is that the large-capacity battery is composed of a plurality of battery cells B provided in Embodiment 12 connected in parallel, or composed of a plurality of battery cells D provided in Embodiment 14 connected in parallel.

As shown in Fig. 27 and Fig. 28, two ends of the battery pack provided in this embodiment are provided with heat transfer assemblies. The heat transfer assembly includes a heat transfer pipe, and the heat transfer pipe is fixed on the through groove of the terminal 45 or on the clamping groove 462 of the electrical busbar 46. The heat transfer assembly may also be provided with a second heat transfer pipe (not shown in the figures) for heat exchange with the heat transfer pipe. The arrangement of the heat transfer assembly and the terminal or the electrical busbar may make the heat of the battery pack uniform or actively raise or lower the temperature. After the electrolyte is shared, the internal uniformity of the battery pack is improved, which not only prolongs the cycle life of the battery pack, but also further prolongs the service life of the battery pack.

## Claims

1. A battery shell, wherein the battery shell is provided with a first through hole and is also provided with a pipeline covering the first through hole and extending along a thickness direction of the battery shell, the pipeline is provided with a second through hole on a pipe body, and the first through hole communicates with the second through hole.

2. The battery shell as claimed in claim 1, wherein the first through hole or the second through hole is provided with a sealing film, and the sealing film is dissolved when encountering an electrolyte or is opened under the action of an external force.

3. The battery shell as claimed in claim 2, wherein the sealing film is provided with a traction ring, and the traction ring is pulled apart under the traction of an external force to form an opening for injecting an electrolyte.

4. The battery shell as claimed in claim 3, wherein the sealing film is provided with a weak part.

5. The battery shell as claimed in claim 2, wherein when the sealing film is soluble in an electrolyte, a protective film which is insoluble in the electrolyte is also arranged on a side of the sealing film facing the inside of the battery shell, and after the sealing film is dissolved in the electrolyte, the protective film subsequently falls off.

6. The battery shell as claimed in claim 1, wherein the battery shell comprises an upper cover plate, a lower cover plate and a barrel, the upper cover plate is provided with a positive pole and a negative pole, and the first through hole is arranged on the lower cover plate; the lower cover plate is also provided with a first mounting seat along a thickness direction of the battery shell; and a side wall of the barrel is also provided with a second mounting seat along a height direction of the battery shell.

7. The battery shell as claimed in claim 6, wherein the lower cover plate and the pipeline are integrally formed aluminum extrusion components; the barrel is an aluminum extrusion component; and the lower cover plate and the barrel are fixed by laser welding.

8. The battery shell as claimed in claim 6, wherein a surface of the barrel is provided with a plurality of heat dissipation grooves.

9. A battery shell, a pouch battery core being placed in the battery shell, wherein the battery shell is enclosed by an upper cover plate, a lower cover plate and a barrel, the battery shell also comprises an electrolyte sharing unit arranged on the lower cover plate or the barrel, the electrolyte sharing unit comprises a pipeline and a first through hole, the lower cover plate or the barrel is provided with a second through hole, and the first through hole communicates with the second through hole.

10. The battery shell as claimed in claim 9, wherein the lower cover plate or the barrel is provided with a fixed base, and the pipeline is laid on the fixed base along a thickness direction of the battery shell.

11. The battery shell as claimed in claim 10, wherein the fixed base is provided with a fourth through hole, so that the first through hole communicates with the second through hole through the fourth through hole.

12. The battery shell as claimed in claim 9, wherein two ends of the pipeline are respectively provided with connectors to fixedly connect a plurality of electrolyte sharing units.

13. The battery shell as claimed in claim 9, wherein the pipeline is also provided with a blocking component.

14. The battery shell as claimed in claim 9, wherein the second through hole is provided with a sealing film to seal the second through hole; or the first through hole is provided with a sealing film to seal the first through hole, and the sealing film is dissolved when encountering an electrolyte.

15. The battery shell as claimed in claim 14, wherein the sealing film is also provided with a protective film which is insoluble in the electrolyte, the protective film is attached to a side of the sealing film facing the inside of the battery shell, and when the sealing film is dissolved in the electrolyte, the protective film subsequently falls off.

16. A battery shell, wherein the battery shell is enclosed by a barrel, an upper cover plate and a lower cover plate, the upper cover plate is provided with a pair of poles in an insulated manner, the pole is a cylinder, the cylinder comprises a side wall, a first end surface and a second end surface, the side wall and/or the first end surface is at least provided with one through groove to mount a heat transfer pipe, and the first end surface is also provided with an electrical connection region; and the lower cover plate is provided with a first through hole and is also provided with a pipeline covering the first through hole and extending along a width or length direction of the lower cover plate, the pipeline is provided with a second through hole, and the first through hole communicates with the second through hole.

17. The battery shell as claimed in claim 16, wherein the second end surface is provided with a conductive connection seat for electrical connection with the electrode assembly in the battery shell.

18. The battery shell as claimed in claim 17, wherein the height of the pole is 20-25 mm, the cross section of the through groove is C-shaped or U-shaped, and the distance between the lowest point of the through groove and the second end surface is 7-12 mm.

19. The battery shell as claimed in claim 18, wherein the ratio of the diameter of the heat transfer pipe to the widest point of the through groove is (1:1.05)-(1:1.1); and the ratio of the length of the through groove to the width of the cover plate is (0.7:1)-(0.9:1).

20. The battery shell as claimed in claim 16, wherein the through groove is arranged on the first end surface, the through groove divides the first end surface into a first region and a second region, the first region is the electrical connection region, and the ratio of the area of the first region to the area of the first end surface is not lower than 50%.

21. The battery shell as claimed in claim 16, wherein a surface of the through groove is provided with an insulating layer.

22. The battery shell as claimed in claim 16, wherein the first through hole or the second through hole is provided with a sealing sheet; the sealing sheet is provided with a traction ring, and the traction ring enables the sealing sheet to be pulled apart under the traction of an external force to form an opening; or the first through hole or the second through hole is provided with a sealing film, the sealing film is soluble in an electrolyte, and a protective film which is insoluble in the electrolyte is also arranged on a side of the sealing film facing the inside of the battery shell; and after the sealing film is dissolved in the electrolyte, the protective film subsequently falls off.

23. The battery shell as claimed in claim 16, wherein the lower cover plate is also provided with a first mounting seat along a width direction thereof; a side wall of the barrel is also provided with a second mounting seat along a height direction thereof; and the barrel is provided with a plurality of reinforcing ribs along a height direction thereof.

24. The battery shell as claimed in claim 16, wherein the lower cover plate and the pipeline are integrally formed aluminum extrusion components; the barrel is an aluminum extrusion component; and the lower cover plate and the barrel are fixed by laser welding.

25. A battery cell, wherein the battery cell comprises the battery shell as claimed in any one of claims 1 to 24.

26. A battery cell, wherein the battery cell comprises a battery shell, a sealing assembly and a finished battery core, the finished battery core is mounted in the battery shell, and a finished battery core shell is provided with an opening; the battery shell is provided with a first through hole communicating with the opening and a pipeline extending along a width or length direction of the battery shell, and a side wall of the pipeline is provided with a second through hole communicating with the first through hole; and the sealing assembly is arranged on the opening or the first through hole or the second through hole.

27. The battery cell as claimed in claim 26, wherein the battery shell comprises a barrel and a lower cover plate; and two ends of the barrel are open ends, the lower cover plate is sealed and fixed at one end of the barrel, and the first through hole and the pipeline are both arranged on the lower cover plate.

28. The battery cell as claimed in claim 27, wherein the battery shell also comprises an upper cover plate, a positive pole and a negative pole of the finished battery core both extend out of the upper cover plate, and the positive pole and the negative pole of the finished battery core are both provided with through grooves for mounting heat transfer pipes.

29. The battery cell as claimed in claim 27, wherein the battery shell also comprises an upper cover plate, the upper cover plate is provided with a positive terminal and a negative terminal, the positive terminal is connected to the positive pole of the finished battery core, the negative terminal is connected to the negative pole of the finished battery core, and the positive terminal and the negative terminal are both provided with through grooves for mounting heat transfer pipes.

30. The battery cell as claimed in any one of claims 26 to 29, wherein the sealing assembly comprises a fixed part and an electrolyte injection part, and the fixed part is a sheet structure provided with a third through hole to fix the fixed part on the opening or the first through hole or the second through hole; and the electrolyte injection part is a hollow tubular structure provided with an open end and a closed end, the open end is fixed on the third through hole to enable the electrolyte injection part to communicate with an inner cavity of the battery shell, and the closed end is configured to inject an electrolyte into the inner cavity of the battery shell after being opened under the action of an external force.

31. The battery cell as claimed in any one of claims 26 to 29, wherein the sealing assembly is a sealing sheet fixed on the opening or the first through hole or the second through hole, the sealing sheet is provided with a traction ring, and the traction ring enables the sealing sheet to be pulled apart under the traction of an external force to form an opening; or the sealing assembly is a sealing film fixed on the opening or the first through hole or the second through hole, the sealing film is soluble in an electrolyte, and a protective film which is insoluble in the electrolyte is also arranged on a side of the sealing film facing the inside of the battery shell; and after the sealing film is dissolved in the electrolyte, the protective film subsequently falls off.

32. The battery cell as claimed in claim 27, wherein the lower cover plate is also provided with a first mounting seat along a width direction thereof; and a side wall of the barrel is also provided with a second mounting seat and a plurality of reinforcing ribs along a height direction thereof.

33. The battery cell as claimed in claim 32, wherein the lower cover plate and the pipeline are integrally formed aluminum extrusion components; the barrel is an aluminum extrusion component; and the lower cover plate and the barrel are fixed by laser welding.

34. The battery cell as claimed in claim 26, wherein the finished battery core is a commercially available square battery core or the finished battery cores are a plurality of commercially available pouch battery cores connected in parallel.

35. A large-capacity battery, comprising a plurality of battery packs composed of battery cells as claimed in any one of claims 25 to 34 connected in parallel.

36. The large-capacity battery as claimed in claim 35, wherein the battery cells are connected by a connector, the pipelines of two adjacent battery cells are connected by the connector, and the inside of the connector is hollow and communicated.

37. The large-capacity battery as claimed in claim 36, wherein two ends of the connector comprise connecting nozzles, two ends of the pipeline are provided with connecting ports, and the connecting nozzle is embedded in the connecting port for sealed connection; or two ends of the connector comprise connecting ports, two ends of the pipeline are provided with connecting nozzles, and the connecting nozzle is embedded in the connecting port for sealed connection.

38. The large-capacity battery as claimed in claim 37, wherein the connecting nozzle is a conical nozzle, the connecting nozzle is in interference fit with the connecting port, or the connecting nozzle is in threaded connection with the connecting port.

39. The large-capacity battery as claimed in claim 38, wherein a pouch battery core is built in the battery shell, the pipelines are spliced to form an explosion venting channel of the battery pack, and at least one end of the explosion venting channel is provided with a fume outlet.

40. The large-capacity battery as claimed in claim 38, wherein an electrode assembly or a pouch battery core provided with an opening is built in the battery shell; when the pipelines are spliced to form an electrolyte sharing channel of the battery pack, the first through hole or the second through hole is provided with a sealing film, and the sealing film is dissolved when encountering an electrolyte or is opened under the action of an external force; and one end of the electrolyte sharing channel is provided with an explosion venting assembly, and the other end of the electrolyte sharing channel is provided with a blocking component.

41. The large-capacity battery as claimed in claim 40, wherein the explosion venting assembly is provided with a detachable port, and the port is configured to inject an electrolyte into the electrolyte sharing channel.
